# EUROPEAN PATENT SPECIFICATION

(11) **EP 3 048 855 B1**
(45) Date of publication and mention of the grant of the patent: **18.09.2019**
(21) Application number: 16152339.4
(22) Date of filing: 22.01.2016
(51) Int. Cl.: H04N 21/436, H04N 21/4363, H04N 21/4367, H04N 21/475, H04L 29/06

(54) **COMMUNICATION PROTOCOL SELECTION FOR IMAGE PROCESSING APPARATUS**
AUSWAHL DES KOMMUNIKATIONSPROTOKOLLS FÜR BILDVERARBEITUNGSVORRICHTUNG
SELECTION DU PROTOCOLE DE COMMUNICATION POUR APPAREIL DE TRAITEMENT D'IMAGES

(30) Priority: 23.01.2015 KR 20150011225
(43) Date of publication of application: 27.07.2016
(73) Proprietor: Samsung Electronics Co., Ltd., Gyeonggi-do 16677 (KR)
(72) Inventor: JEE, Ho Jeen, 17003 Gyeonggi-do (KR); SHIM, Seung Seop, 14061 Gyeonggi-do (KR); CHO, Jung Yon, 16505 Gyeonggi-do (KR)
(74) Representative: Appleyard Lees IP LLP

(56) References cited:
- EP-A1- 1 633 104
- US-A1- 2002 147 819

## Description

### BACKGROUND

### Field

Disclosed apparatuses and methods relate generally to an image processing apparatus that displays an image based on an image signal by itself or outputs image data processed in accordance with an image processing process to an external apparatus for displaying an image based on the image data and a method of controlling the same, and for example, to an image processing apparatus, improved in a structure of connecting and communicating with another apparatus through a wireless network in a system involving a plurality of image processing apparatuses, and a method of controlling the same.

### Description of Related Art

An image processing apparatus processes an image signal/video data received from the exterior in accordance with various video processing processes. The image processing apparatus may display an image based on the processed video data on its own display panel, or output the processed image signal to another display apparatus provided with a panel so that on the corresponding display apparatus can display an image based on the processed image signal. That is, the image processing apparatus may include the panel capable of displaying an image or include no panel as long as it can process the video data. For example, the former may include a television (TV), and the latter may include a set-top box.

To meet development of technology and demands of a user, a system including a plurality of image processing apparatuses rather than a single image processing apparatus may be implemented in a general home. This system may include not only the image processing apparatus but also various electronic apparatuses such as home appliances. Further, the system may include a mobile apparatus such as a mobile phone or a tablet personal computer (PC) in accordance with development of mobile technology. The respective apparatuses of the system can connect and communicate with one another through cables. However, the cables are inconvenient to use, and thus cable communication has recently been replaced by wireless communication. The wireless communication is performed based on various protocols, and each apparatus supports one or more among various previously appointed protocols. For the wireless communication between two apparatuses, both the apparatuses have to support the same protocol and be completely paired by the corresponding wireless protocol. For the pairing completion, a first apparatus needs to make a request for communication, and a second apparatus needs to accept the request of the first apparatus.

There may be a plurality of wireless protocols supported in common by both the apparatuses. That is, the protocol for communication between the first apparatus and the second apparatus is not limited to one type of protocol. If the first apparatus tries connecting and communicating with the second apparatus through a second type of protocol in the state that the first apparatus and the second apparatus are completely paired by a first type of protocol, they have to be paired once again through the second type of protocol. In this case, it may be inconvenient for a user of the second apparatus since s/he has to go through procedures for accepting a request of the first apparatus for communication based on the second type of protocol.

US 2002/147819 describes how by connecting a wireless communication terminal, which has a cable communication unit, to another wireless communication terminal, which also has a cable communication unit, via their respective cable communication units, guide information, which is required to determine communication parameters for wireless communication between said two wireless communication terminals using their respective wireless communication units, is communicated under said connection.

EP 1633104 relates to a communication system, a communication apparatus, and a communication method as well as to a program for acquiring the advantages of a plurality of communication protocols.

### SUMMARY

According to an aspect of an example embodiment there is provided an image processing apparatus as set out in accompanying claim 1. Thus, after the external apparatus' request for the communication connection based on a certain protocol is approved once, there is no need of repetitively performing the approval procedure even though the request for the communication connection based on another protocol is received from the same external apparatus, thereby improving convenience in use.

The image processing apparatus may further include a display, wherein if it is determined that any one of the first ID and the second ID has not been registered in the storage, the at least one processor is configured to control the display to display a user interface (Ul) providing a selection of whether to approve of the request for the communication connection. The at least one processor may be configured to register the first ID and the second ID, extracted from the request, in the storage if receiving an approval selected through the UI, and to permit the communication connection based on the first protocol. Thus, a user can easily approve of the request for communication connection from the unregistered external apparatus.

The at least one processor may be configured to block the communication connection based on the first protocol if receiving a disapproval selected through the UI. Thus, it is easy for a user to block an undesired external apparatus' request for the communication connection through the UI.

The request may comprise ID information of the external apparatus based on all the communication protocols for communication between the external apparatus and the communicator. Thus, if the communication connection based on a certain protocol among all the protocols supportable by the external apparatus is approved, the communication connection can be automatically performed without repetitively performing the procedure with regard to the other protocols.

The plurality of communication protocols may comprise at least one of wireless fidelity (Wi-Fi), Wi-Fi direct, universal plug and play (UPNP), Bluetooth and near-field communication (NFC). Thus, it is possible to avoid repetitive user approval procedures with respect to various communication protocols.

According to an aspect of an example embodiment there is provided a method of controlling an image processing apparatus as set out in accompanying claim 8. Thus, after the external apparatus' request for the communication connection based on a certain protocol is approved once, there is no need of repetitively performing the approval procedure even though the request for the communication connection based on another protocol is received from the same external apparatus, thereby improving convenience in use.

The method may further include displaying a user interface (Ul) through which a selection is provided whether to approve of the request for the communication connection if it is determined that any one of the first ID and the second ID has not been registered. The displaying the UI may include registering the first ID and the second ID, extracted from the request, if receiving an approval selected through the UI, and permitting the communication connection based on the first protocol. Thus, a user can easily approve of the request for communication connection from the unregistered external apparatus.

The display of the UI may include blocking the communication connection based on the first protocol if receiving a disapproval selected through the UI. Thus, it is easy for a user to block an undesired external apparatus' request for the communication connection through the UI.

The request comprises ID information of the external apparatus based on all the communication protocols for communication between the external apparatus and the image processing apparatus. Thus, if the communication connection based on a certain protocol among all the protocols supportable by the external apparatus is approved, the communication connection can be automatically performed without repetitively performing the procedure with regard to the other protocols.

The plurality of communication protocols may comprise at least one of wireless fidelity (Wi-Fi), Wi-Fi direct, universal plug and play (UPNP), Bluetooth and near-field communication (NFC). Thus, it is possible to avoid repetitive user approval procedures with respect to various communication protocols.

Other features of the invention will be apparent from the dependent claims, and the description which follows.

### BRIEF DESCRIPTION OF THE DRAWINGS

The above and/or other aspects will become apparent and more readily appreciated from the following detailed description, taken in conjunction with the accompanying drawings, in which like reference numerals refer to like elements, and wherein:
FIG. 1 is a diagram illustrating an example system;
FIG. 2 is a diagram illustrating an example structure of layers in an open systems interconnection (OSI) model;
FIG. 3 is a diagram illustrating example communication protocols applicable to data communication between a mobile apparatus and a television (TV) in the system of FIG. 1;
FIG. 4 is a block diagram illustrating an example mobile apparatus in the system of FIG. 1;
FIG. 5 is a block diagram illustrating an example TV in the system of FIG. 1;
FIG. 6 is a flowchart illustrating an example procedure in which the TV accepts communication connection in response to a communication-connection request of the mobile apparatus;
FIG. 7 is a diagram illustrating an example user interface (Ul) displayed by the TV in the system of FIG. 1, when identification (ID) of the mobile apparatus has not been registered in the TV;
FIG. 8 is a diagram illustrating an example management system for communication connection of the TV in the system of FIG. 1;
FIG. 9 and FIG. 10 are sequence diagrams illustrating example signal flows when the mobile apparatus makes a request for communication connection based on universal plug and play (UPNP) and wireless fidelity (Wi-Fi) direct to the TV in the system of FIG. 1 in the state that the mobile apparatus has not been registered in the TV;
FIG. 11 is a diagram illustrating an example principle of a management system for the communication connection in the TV;
FIG. 12 is a diagram partially illustrating an example format of a request message for Wi-Fi direct-based communication connection from the mobile apparatus;
FIG. 13 is a diagram illustrating an example definition of a protocol and device ID;
FIG. 14 and FIG. 15 are sequence diagrams illustrating example signal flows when the mobile apparatus makes sequential requests for communication connection based on UPNP and Wi-Fi direct to the TV in the state that the mobile apparatus has not been registered in the TV;
FIG. 16 and FIG. 17 are sequence diagrams illustrating example signal flows when the mobile apparatus makes sequential requests for communication connection based on Wi-Fi direct and UPNP to the TV in the state that the mobile apparatus has not been registered in the TV;
FIG. 18 is a flowchart illustrating an example control method of the mobile apparatus;
FIG. 19 is a flowchart illustrating an example control method of the TV;
FIG. 20 and FIG. 21 are sequence diagrams illustrating example signal flows when the mobile apparatus makes sequential requests for the Wi-Fi direct-based communication connection and the UPNP-based communication connection based on Wi-Fi direct and UPNP to the TV in the state that the mobile apparatus has not been registered in the TV;
FIG. 22 is a flowchart illustrating an example control method of the mobile apparatus;
FIG. 23 is a flowchart illustrating an example control method of the TV;
FIG. 24 is a sequence diagram illustrating example signal flows when the TV approves the communication connection with the mobile apparatus;
FIG. 25 is a sequence diagram illustrating example signal flows when the TV approves the communication connection with the mobile apparatus; and
FIG. 26 is a sequence diagram illustrating example signal flows when the TV approves the communication connection with the mobile apparatus.

### DETAILED DESCRIPTION

Below, example embodiments will be described in greater detail with reference to accompanying drawings. The following descriptions of the example embodiments are made by referring to elements illustrated in the accompanying drawings, in which like numerals refer to like elements having substantively the same functions.

In the description, an ordinal number used in terms such as a first element, a second element, etc. is used to describe a variety of elements, and the terms are used for distinguishing between one element and another element. Therefore, the meanings of the elements are not limited by the terms, and the terms are also used merely for explaining the corresponding embodiment without limiting the disclosure.

Further, the example embodiments may describe only elements directly related to the disclosure, and description of the other elements may be omitted. However, it will be appreciated that the elements, the descriptions of which are omitted, may not be unnecessary to realize the apparatus or system. In the following descriptions, terms such as "include" or "have" refer to presence of features, numbers, steps, operations, elements or combination thereof, and do not exclude presence or addition of one or more other features, numbers, steps, operations, elements or combination thereof.

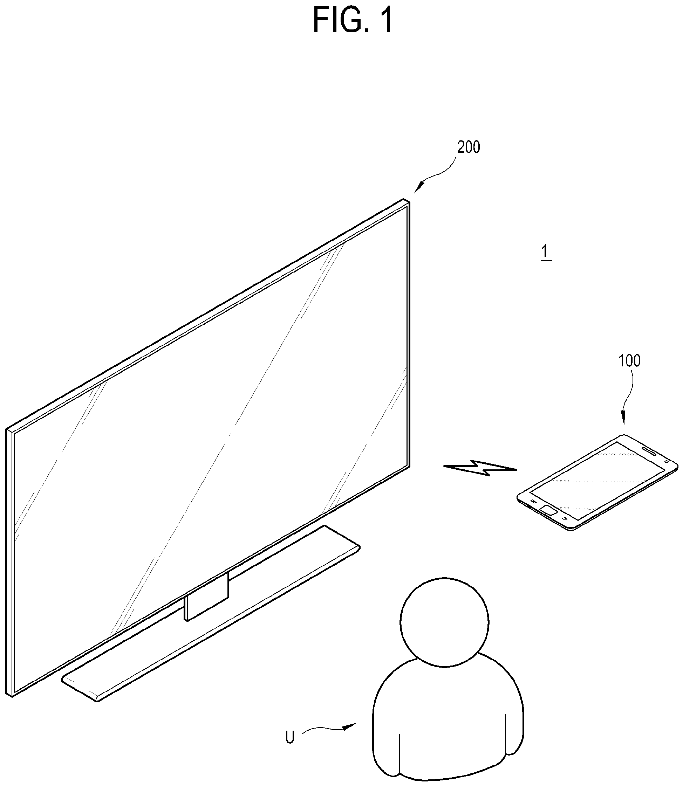

FIG. 1 is a diagram illustrating an example system.

As illustrated in FIG. 1, a system 1 may include, for example, a mobile apparatus 100 and a TV 200, which are capable of displaying images, respectively. The system 1 may include a plurality of image processing apparatuses or electronic apparatuses, and the TV 200 and the mobile apparatus 100 may be examples of various image processing apparatus or various electronic apparatus. The system 1 may include, for example, a set-top box, an optical media player, a tablet personal computer (PC), a mobile phone, a home appliance, etc. For easy and clear description, the system 1 in this example includes two apparatuses by way of example. Alternatively, the system 1 may include three or more apparatuses, and the following examples may be applied to this alternative case.

The TV 200 and the mobile apparatus 100 may respectively display images to provide the image to a user U. For example, the TV 200 and the mobile apparatus 100 may be independent of each other, and may be linked through data/signal communication.

For example, a user U may want to view an image, which is being displayed on the mobile apparatus 100, through the TV 200. There are many methods available for realizing the viewing of an image displayed on the mobile apparatus 100 on the TV 200. For example, a mirroring method in which the mobile apparatus 100 transmits data of an image displayed thereon by itself to the TV 200 and the TV 200 processes data received from the mobile apparatus 100 to be displayed as an image may be used. The mobile apparatus 100 may transmit not only the data of the image but also additional information such as played time information of the image. Thus, the TV 200 may refer to the additional information received from the mobile apparatus 100, and play an image in succession to a stopped time of the corresponding image paused in the mobile apparatus 100.

Alternatively, the mobile apparatus 100 may perform content sharing in which only information for acquiring image data, such as address of the image data, etc., is transmitted to the TV 200 without directly transmitting the image data to the TV 200. In this example, the TV 200 may acquire the image data from a third apparatus such as a server (not shown) based on the received information.

For the linkage between two apparatuses 100 and 200, the following two conditions have to be satisfied: one is that a common communication mode is supported by two apparatuses 100 and 200, and the other is that two apparatuses 100 and 200 are paired to recognize each other based on the common communication mode. For example, the mobile apparatus 100 must support at least one of common communication protocols in order to communicate with the TV 200, and be paired by the corresponding communication protocol.

If there are no common protocols among the communication protocols supportable in both the mobile apparatus 100 and the TV 200, the mobile apparatus 100 and the TV 200 cannot communicate with each other. Further, if the mobile apparatus 100 and the TV 200 are not paired even though there is a common protocol supportable between them, the mobile apparatus 100 and the TV 200 cannot exchange data/signals with each other.

The protocol may, for example, refer to a preset rule for network communication. There are many detailed functions of any given protocol, and the functions may roughly include address designation, order designation, fragmentation, recombination, flow control, connection control, error control, capsulation, synchronization, multiplexing, etc.

Schematic descriptions of protocol functions may respectively be as follows. The address designation may, for example, designate a name of an opponent when one device transmits data to the other device. The order designation may, for example, designate order of unit pieces of data to be transmitted when massive data, which is hard to be transmitted at one time, is fragmented into the unit pieces of data and then transmitted. The fragmentation may, for example, fragment the massive data in accordance with transmission units. The recombination may, for example, combine the fragmented pieces of data. The flow control may, for example, control the amount or speed of data to be transmitted. The connection control may, for example, control the sentence, meaning, time and the like for setting connection for transmitting data. The error control may, for example, detect and correct an error that may occur during transmission of data. The capsulation may, for example, add various pieces of information to data when data is transmitted. The synchronization may, for example, share a certain information value when data is transmitted between two devices. The multiplexing may, for example, allow many devices to simultaneously communicate through one cable.

Because the protocol defines many functions for communication between the devices, networking between two devices is impossible if there are no common protocols between them.

The currently defined example communication protocols may be variously provided and applied in accordance with layers of, for example, an open systems interconnection (OSI) reference model. The OSI model is a model developed by international standardization organization (ISO), in which network protocol design and communication are divided and described in accordance with layers.

A communication control function to be performed in a computer, a terminal, etc. may include various kinds of functions from a function of controlling a physical communication line to a function depending on the kind of work processes. Therefore, there has been generally used a method of dividing the communication control function into many layers and designing independent protocols for the respective layers in order to define the protocol. In this manner, the communication function may be divided into seven layers and standardized service and protocol suitable for functional definition of each layer are defined, which will be referred to as the OSI model.

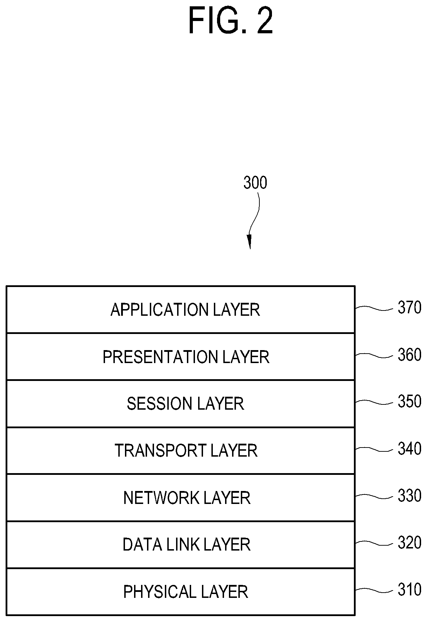

Below, the OSI model will be described with reference to FIG. 2.

FIG. 2 is a diagram illustrating an example structure of layers in the OSI model.

As illustrated in FIG. 2, an OSI model 300 divides various protocols in accordance with functions, in which each layer uses only functions of underlying layers and provides functions to upper layers. The OSI model 300 includes, for example, a total of seven layers 310, 320, 330, 340, 350, 360 and 370, and the respective layers 310, 320, 330, 340, 350, 360 and 370 perform sectional functions of the data communication.

The OSI model 300 includes, for example, a physical layer 310, data link layer 320, a network layer 330, a transport layer 340, a session layer 350, a presentation layer 360, and an application layer 370. Among them, the physical layer 310 is the lowest layer, and the application layer 370 is the highest layer.

The physical layer 310, the data link layer 320 and the network layer 330 are related to a user's network interface protocol, and deal with a problem that a user sends data to a final destination through a network without loss. The transport layer 340 serves to safely transport all messages on a network without error, as an interface between three underlying layers 310, 320 and 330 and three upper layers 350, 360 and 370. The session layer 350, the presentation layer 360 and the application layer 370 are used to define and establish matters related to a user or user procedure, i.e. sessions, application programs, formats, etc.

The physical layer 310 defines electrical and physical details needed for connecting devices in practice, i.e. mechanical and electric characteristics. The physical layer 310 is a layer for transmitting data bits on a network, and provides a means for setting, keeping and releasing a physical connection for bit transmission between data link objects. Matters performed in the physical layer 310 include, for example, connection/disconnection with regard to physical media for information delivery, efficient distribution of communication resources among many users, conversion and modulation of digital data to be transmitted through communication channels, etc.

The data link layer 320 is a layer to reliably secure point-to-point transmission, which performs error control and flow control based on cyclic redundancy check (CRC). The data link layer 320 provides a functional and procedural means needed for data transmission between the objects on the network, and check and correction of an error that may occur in the physical layer 310.

A representative example of the data link layer 320 is Ethernet. Ethernet is the computer network technology developed for a local area network (LAN), which in particularly defines a media access control (MAC) packet and a protocol type in the data link layer 320.

The MAC address defined in the Ethernet is a unique identifier given to most network adapters. For example, LAN cards of two different apparatuses have different MAC addresses, and a plurality of network adapters in one address also has different MAC addresses. The MAC address is assigned a total of 48 bits, in which an identification code of an organizational unique identifier (OUI) manufacturer and information about a network interface card (NIC) manufacturer are included in the first 24bits, and information about the LAN card is included in the second 24 bits.

Such a MAC identifier type is applied to various protocols such as Ethernet, Bluetooth, Wi-Fi, a wireless network, etc.

The network layer 330 is a layer responsible for packet forwarding to find a path whenever passing a node, which performs routing, flow control, segmentation, error control, internetworking, etc. A router operates in the network layer 330, and an Internet protocol (IP) is a representative of the network layer 330.

The transport layer 340 allows two end users to exchange data reliably. The transport layer 340 uses an error control manner based on sequence number, and controls effectiveness of certain connection. The transport layer 340 has main functions of error detection and recovery, flow control, redundancy check, etc. As representative examples of the transport layer 340, there are a transmission control protocol (TCP), a user datagram protocol, etc.

The session layer 350 provides a mechanism for managing a session between end user application processes. The session layer 350 synchronizes communication users, and deals with error recovery commands in a lump. As prime examples of the session layer 350, there are hypertext transfer protocol (HTTP), file transfer protocol (FTP), simple mail transfer protocol (SMTP), post office protocol (POP), etc.

The presentation layer 360 serves as a data translator for the network. The presentation layer 360 has functions such as data conversion, text code translation, encryption, decryption, etc.

The application layer 370 is directly linked to an application process and performs a general application service. The application layer 370 provides the service to a user and transmits the user's information or commands to the underlying layer.

Each layer of the OSI model 300 includes various kinds of communication protocols, and thus many electronic apparatuses such as the image processing apparatus may be designed to support two or more communication protocols when they are manufactured.

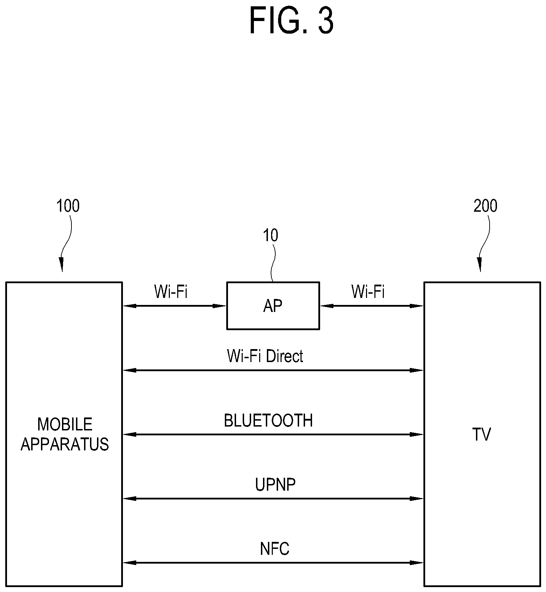

FIG. 3 is a diagram illustrating example communication protocols applicable to data communication between the mobile apparatus 100 and the TV 200. In this example embodiment, not only a wireless communication protocol but also a wired communication protocol may be applicable.

As illustrated in FIG. 3, the mobile apparatus 100 may connect and communicate with the TV 200 through, for example, wireless fidelity (Wi-Fi), Wi-Fi direct, Bluetooth, universal plug and play (UPNP), near field communication (NFC), Bluetooth, and the like communication protocols. As such, the mobile apparatus 100 and the TV 200 include communication modules (not shown) supporting the corresponding protocols, respectively. The mobile apparatus 100 and the TV 200 may support only some protocols among the foregoing the protocols, and may additionally support other protocols.

Below, the respective protocols will be described schematically.

Wi-Fi may refer, for example, to a protocol of supporting wireless local area network based on institute of electrical and electronics engineers (IEEE) 802.11 and personal area network (PAN)/local area network (LAN)/wide area network (WAN), etc. In an infrastructure mode, Wi-Fi provides wireless communication relayed by access points (AP) 10 in between devices. In IEEE 802.11n, Wi-Fi guarantees a maximum transmission speed of 300Mbps.

The AP 10 may be connected to a router accessing an exterior WAN, and may form a hot spot of a predetermined range within an unclosed space. The mobile apparatus 100 may be positioned within the hot spot around the AP 10 and wirelessly accesses the AP 10, thereby connecting and communicating with a network via the AP 10. The range of the hot spot may be expanded by additionally installing a repeater or the like device for amplifying a signal. However, it is not recommended for a user to use Wi-Fi for the wireless communication while s/he is moving since the hot spot generally has a narrow range.

If the mobile apparatus 100 goes outside of the hot spot, i.e., the mobile apparatus 100 goes beyond a range accessible to the AP 10, the mobile apparatus 100 may not connect and communicate with the TV 200. For example, the AP 10 is necessary for wireless communication under the infrastructure of the Wi-Fi protocol.

Wi-Fi direct may refer, for example, to a protocol which is based on peer-to-peer (P2P) and does not use the AP 10 in Wi-Fi. Using Wi-Fi direct, the mobile apparatus 100 may directly connect and communicate with the TV 200 without using the AP 10. Wi-Fi direct guarantees the maximum transmission speed of 250Mbps within a distance of 200m between the devices.

Wi-Fi direct utilizes a technique related to ad-hoc among Wi-Fi techniques. An ad-hoc network is a communication network established with only mobile hosts without a stationary wired network. The ad-hoc network is suitable when it is difficult to establish the wired network or when it is used for a short time after establishing the network. The ad-hoc network has advantages that the network is quickly and inexpensively established since there is no limit to move the host and there is no need of a wired network and a base station. In the ad-hoc network, mobile nodes are used as not only hosts but also as a kind of router, and multi-paths may be set up with regard to other nodes or a path may be dynamically set up. Wi-Fi direct is a technique achieved to improve transmission speed and security by remedying the ad-hoc technique's shortcomings.

Wi-Fi direct is fundamentally related to 1:1 connection, but 1:N connection is also possible. For example, the mobile apparatus 100 may have the following processes in order to connect and communicate with the TV 200 in accordance with a Wi-Fi direct protocol. The mobile apparatus 100 sends a connection request message to the TV 200 by a push method. If the TV 200 accepts the connection request of the mobile apparatus 100, a pairing is completed between the mobile apparatus 100 and the TV 200.

Bluetooth is a direct communication method between devices based on IEEE 802.15.1 standards. Bluetooth uses an industrial scientific and medical (ISM) frequency of 2400 to 2483.5MHz. However, to prevent interference with other systems using higher and lower frequencies, Bluetooth employs total 79 channels of 2402 to 2480MHz except a band as much as 2MHz after 2400MHz and a band as much as 3.5MHz before 2483.5MHz.

Since many systems use the same frequency band, electromagnetic interference is likely to occur between the systems. To avoid this, Bluetooth employs a frequency hopping technique. The frequency hopping technique is to transmit a packet (data) little by little while moving in many channels quickly in accordance with certain patterns. Bluetooth hops over 79 assigned channels 1600 times per second. Communication is accomplished when this hopping pattern is synchronized between Bluetooth devices. Since Bluetooth devices are connected as a master and a slave, the communication is not achieved between the two devices if the slave device is not synchronized with frequency hopping generated by the master device. Therefore, stable connection is expected without electromagnetic interferences with other systems. For reference, one master device can connect with up to seven slave devices. For example, communication between the master device and the slave device is possible, but communication between the slave devices is impossible. However, the roles of the master and the slave may be exchangeable with each other according to situations since they are not fixed.

UPNP refers to a protocol for connecting devices by a P2P method in accordance with digital living network alliance (DLNA). UPNP utilizes the existing protocols such as Internet protocol, tape carrier package (TCP), user datagram protocol (UDP), hypertext transfer protocol (HTTP), and extensible mark-up language (XML). UPNP is based on a wired protocol, in which information exchanged between devices is represented in the XML and communicated through the HTTP.

Wi-Fi, Bluetooth or the like protocol uses 48-bit media access control (MAC) address as a unique identifier of a communication module, whereas UPNP uses an identifier of universally unique identifier (UUID). UUID is an identifier of 16 octets, i.e. 128 bits, and is represented by 32 lowercase hexadecimal digits. UUID is a set of 32 characters or digits, represented by four hyphens, and has a total 36-digit number of "8-4-4-4-12".

NFC is one of radio-frequency identification (RFID), which is a contactless short-range wireless communication protocol using a frequency band of 13.56MHz. NFC is a technique to exchange data between devices at a near distance of about 10cm, which is extended from ISO/IEC 14443. NFC operates based on electromagnetic induction between two adjacent loop antennas within a magnetic field.

NFC supports two modes of a passive communication mode and an active communication mode. In the passive communication mode, a starting device provides a carrier field, and a target device operates while modulating the provided fields. The target device of the passive communication mode acquires operation power from the electromagnetic field provided by the starting device, and thus the target device also serves as a transceiver. In the active communication mode, both the starting device and the target device communicate with each other by generating electric fields in itself. In the passive communication mode, one device releases its own electromagnetic field until receiving data from an opponent, and activates its own electromagnetic field when transmitting data to the opponent.

Thus, the mobile apparatus 100 and the TV 200 can respectively support a plurality of various communication protocols, and communicate with each other through one protocol selected among them. While a user uses the mobile apparatus 100 and the TV 200, the protocol through which the mobile apparatus 100 and the TV 200 communicate with each other may be changed into another protocol as necessary. In this example, the change of the protocol may be inconvenient for a user who uses the mobile apparatus 100 and the TV 200 since the protocols are different in the definition of connecting the apparatuses. This inconvenient situation will be described later.

Below, details of the mobile apparatus 100 and the TV 200 are described in greater detail.

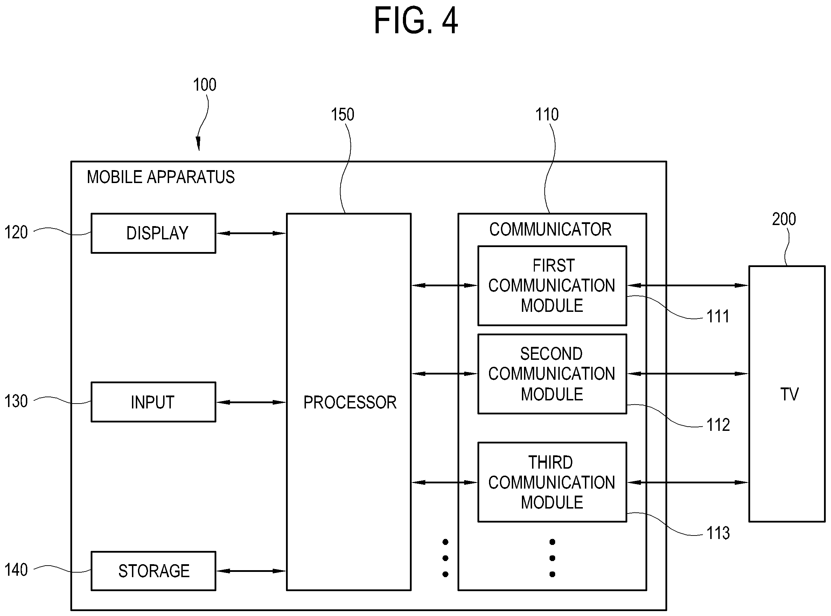

FIG. 4 is a block diagram illustrating an example mobile apparatus 100.

As illustrated in FIG. 4, the mobile apparatus 100 may include, for example, a communicator (e.g., including communication circuitry) 110 configured to communicate with various external apparatuses such as the TV 200 so as to exchange data with the external apparatus; a display 120 configured to display an image 120; an input 130 configured to receive a user's input; a storage 140 configured to store data; and a processor 150 configured to control general operations of the mobile apparatus 100 and process data. Among them, the communicator 110, the storage 140, the processor 150 and the like may, for example, be mounted on a single printed circuit board (not shown) and thus realized as an image processing board (not shown).

The communicator 110 transmits and receives data through a short-distance/wide area network so that the mobile apparatus 100 can interactively communicate with the TV 200. The communicator 110 accesses the TV 200 in accordance with preset wired/wireless communication protocols. The communicator 110 may be achieved by a group of communication modules 111, 112 and 113 corresponding to the protocols, and each of the communication modules 111, 112 and 113 is not limited to one type or kind of protocol.

The communication modules 111, 112 and 113 are provided to support communications based on preset protocols, respectively. For example, the first communication module 111 may support Wi-Fi communication, the second communication module 112 may support Bluetooth communication, and the third communication module 113 may support UPNP communication. Thus, the communicator 110 includes a plurality of communication modules 111, 112 and 113 based on the respective protocols, so that the mobile apparatus 100 can communicate with the TV 200 based on one protocol selected among the plurality of protocols.

The display 120 displays an image based on a video stream processed by the processor 150. The display 120 may be realized by various display types such as, for example, liquid crystal, plasma, light-emitting diodes, organic light-emitting diodes, carbon nano-tubes, nano-crystal, quantum-dot, etc. without limitation.

The display 120 may include additional elements in accordance with its types. For example, if the display 120 is achieved by the liquid crystal, the display 120 may include a liquid crystal display (LCD) panel (not shown), a backlight unit (not shown) for supplying light to the LCD panel, and a panel driving substrate (not shown) for driving the LCD panel (not shown).

The input 130 sends the processor 150 a variety of preset control commands or information in response to, for example, a user's operation or inputs. The input 130 provides information regarding various events generated by a user's control corresponding to his/her intention and sends the information to the processor 150. The input 130 may be achieved in various forms for generating input information from a user. For example, the input 130 may include a key/a button installed outside the image processing apparatus 100, or a touch screen integrated with the display 120, or the like.

The storage 140 stores a variety of data under process and control of the processor 150. The storage 140 may, for example, be achieved by a flash-memory, a hard-disc drive or the like nonvolatile memory to preserve data regardless of supply of system power. The storage 140 may be accessed by the processor 150 and performs reading, writing, editing, deleting, updating and the like with regard to data.

The processor 150 is configured to perform various processes with regard to a signal/data received in the communicator 110. If an image signal is received in one among the plurality of communication modules 111, 112 and 113 in the communicator 110, the processor 150 applies the image processing process to the image signal and outputs a processed video stream to the display 120 so that the display 120 can display an image based on the image signal.

There is no limit to the kind of image processing process performed by the processor 150, and the video processing process may for example include demultiplexing for separating an input signal into sub-signals such as video, audio and additional data, decoding corresponding to image formats of the image signal, de-interlacing for converting image data from an interlaced type into a progressive type, scaling for adjusting the image signal to have a preset resolution, noise reduction for improving image quality, detail enhancement, frame refresh rate conversion, etc.

Further, the processor 150 may be configured to send a request for communication connection to the TV 200 through the communicator 110 for pairing between the mobile apparatus 100 and the TV 200. If the processor 150 receives a request for communication connection from the TV 200 through the communicator 110, the processor 110 may be configured to process the received request in accordance with preset processes. The pairing between the mobile apparatus 100 and the TV 200 may be achieved as one of them accepts the request from the other one. In this example embodiment, the TV 200 accepts the request from the mobile apparatus 100. Alternatively, the mobile apparatus 100 may accept the request from the TV 200, but descriptions about such an alternative will be omitted since the foregoing example is equally applicable.

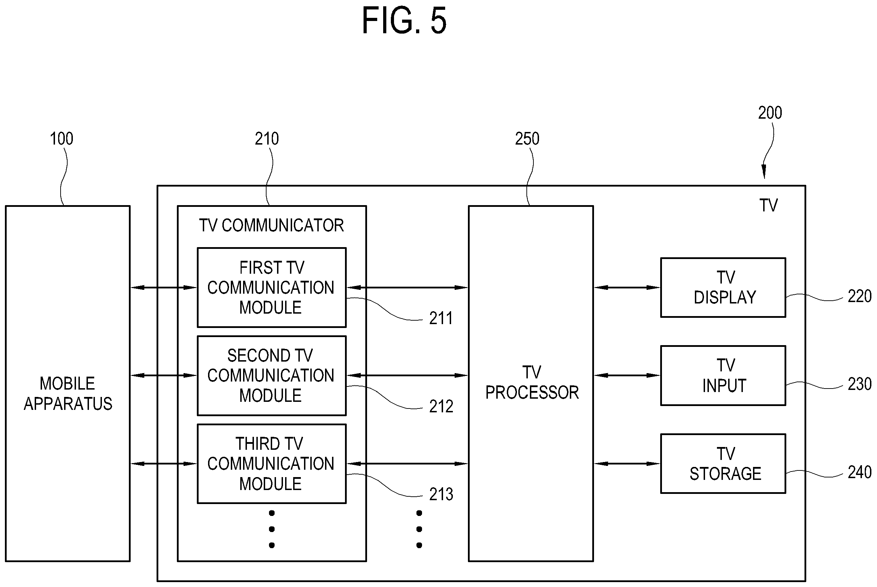

FIG. 5 is a block diagram illustrating an example TV 200.

As illustrated in FIG. 5, the TV 200 may include, for example, a TV communicator (e.g., including communication circuitry) 210 a TV display 220, a TV input 230, a TV storage 240 and a TV processor 250. The TV 200 is an image processing apparatus capable of processing and displaying an image, and thus operations of elements thereof are respectively similar to those of the mobile apparatus 100. However, the TV 200 may be different in functions of from individual elements from the mobile apparatus 100 in terms of its characteristics, but detailed descriptions thereof will be omitted since they are general.

The TV communicator 210 includes a plurality of TV communication modules 211, 212 and 213 provided respectively corresponding to protocols to perform communication based on each communication protocol. If the plurality of TV communication modules 211, 212 and 213 support at least one of the same protocols as the communication modules 111, 112 and 113 (see FIG. 4) of the mobile apparatus 100, communication is possible between the TV 200 and the mobile apparatus 100.

A description in which the TV 200 is paired with the mobile apparatus 100 in accordance with preset communication protocols is provided in greater detail below.

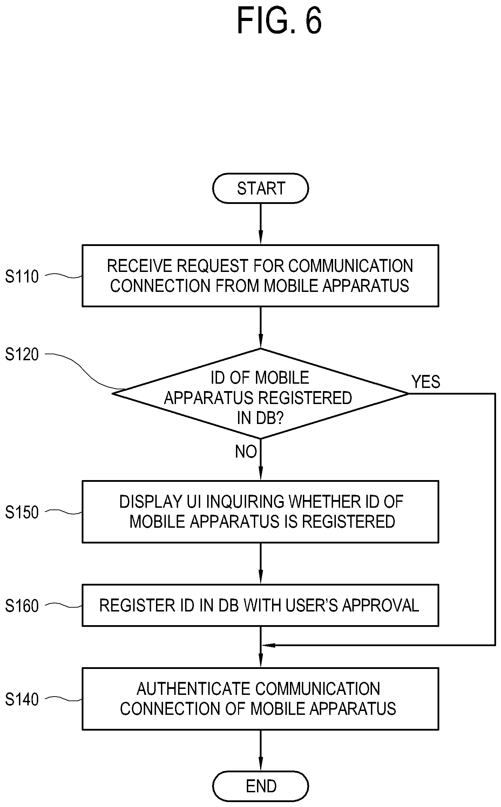

FIG. 6 is a flowchart illustrating an example procedure in which the TV 200 accepts communication connection in response to a communication-connection request of the mobile apparatus 100.

As illustrated in FIG. 6, at operation S110 the TV 200 receives a message requesting communication connection from the mobile apparatus 100. This message basically may include, for example, information about the communication protocols for the communication connection, and identification (ID) information about the mobile apparatus 100 at the corresponding protocol.

At operation S120 the TV 200 retrieves the ID of the mobile apparatus 100 from a previously stored database (DB) to determine whether the ID included in the received message is registered in the DB. Since the ID of the apparatus authenticated to be paired with the TV 200 has been registered to the DB, the apparatus having the ID registered to the DB can connect and communicate with the TV, but the apparatus having the ID not registered to the DB may not be able to connect and communicate with the TV 200.

If it is determined in the operation S120 that the ID of the mobile apparatus 100 has been registered to the DB, the TV 200 determines that the mobile apparatus 100 has already been authenticated to connect and communicate with the TV 200. Thus, at operation S140 the TV 200 authenticates the communication connection with the mobile apparatus 100.

If it is determined in the operation S120 that the ID of the mobile apparatus 100 has not been registered in the DB yet, at operation S150 the TV 200 displays a UI of inquiring a user about whether s/he wants to register the corresponding ID. If a user approves of registering the corresponding ID, at operation S160 the TV 200 register the corresponding ID to the DB. Further, the TV 200 returns to the operation S140 and authenticates the communication connection with the mobile apparatus 100.

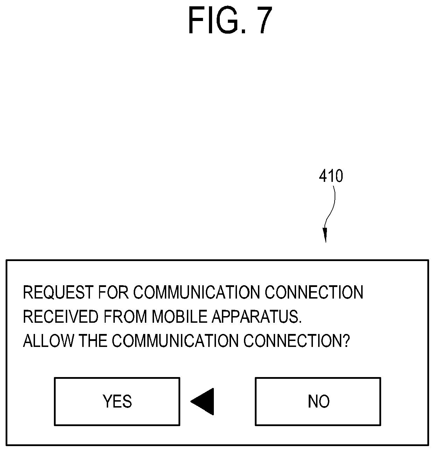

FIG. 7 is a diagram illustrating an example user interface (Ul) 410 displayed by the TV 200 when identification (ID) of the mobile apparatus 100 has not been registered in the TV 200.

As illustrated in FIG. 7, the TV 200 may display a UI 410 enabling a user to select whether to approve of the communication connection with the mobile apparatus 100 from which the request for the communication connection is received. The UI 410 is displayed in the state that the ID of the mobile apparatus 100 has not been retrieved yet in the DB including the IDs for authenticating the communication connection (see S150 in FIG. 4). Through the UI 410, a user may accept the request for the communication connection to permit the communication connection between the mobile apparatus 100 and the TV 200, or may reject the request for the communication connection to forbid the communication connection between the mobile apparatus 100 and the TV 200.

The ID of the mobile apparatus 100 is information enabling the TV 200 distinguish the mobile apparatus 100 from other apparatuses. For example, ID numbers of the communication modules 111, 112 and 113 (see FIG. 4) are used according to the protocols of the mobile apparatus 100. For example, the MAC address is used in case of Wi-Fi or Ethernet, and UUID is used in case of UPNP. The P2P device address is used in case of Wi-Fi direct.

In an example in which the mobile apparatus 100 makes a request for communication connection based on a UPNP protocol to the TV 200. The mobile apparatus 100 transmits UUID information based on the UPNP to the TV 200 in response to the request. The TV 200 retrieves the received UUID from the DB, to determine whether the mobile apparatus 100 has been registered or not. If the UUID has been registered, the TV 200 approves the communication connection without displaying the UI 410. If the UUID has not been registered, the TV 200 may display the UI 410.

In the state that the UUID of the mobile apparatus 100 has been registered in the DB, the mobile apparatus 100 may make a request for communication connection based on a protocol different from the UPNP protocol, e.g., based on Wi-Fi direct or Bluetooth. In this example, the UUID of the mobile apparatus 100 based on the UPNP has been registered in the DB of the TV 200, whereas a P2P device address based on Wi-Fi direct or a Bluetooth MAC address based on Bluetooth of the mobile apparatus 100 has not been registered in the DB.

Therefore, the TV 200 displays the UI 410 again to make a request for approval of the communication connection with the mobile apparatus 100 to a user since the ID of the mobile apparatus 100 making request for this communication connection is not retrieved from the DB. Thus, it is inconvenient for a user to approve of the same mobile apparatus 100 in accordance with the protocols, respectively. This is because a communication connection management system of the TV 200 is divided according to the protocols, which will be described in greater detail below.

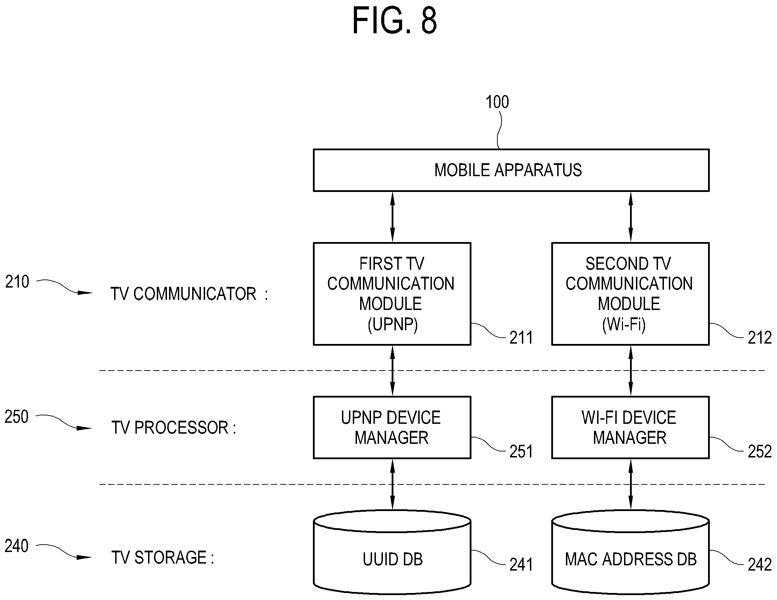

FIG. 8 is a diagram illustrating an example management system for the communication connection of the TV 200.

As illustrated in FIG. 8, if the first TV communication module 211 of the TV communicator 210 is based on the UPNP protocol and the second TV communication module 212 is based on the Wi-Fi protocol, a manager of TV processor 250 is divided based on protocols. For example, the UPNP protocol is controlled by a UPNP device manager 251, and the Wi-Fi protocol is controlled by a Wi-Fi device manager 252.

If the first TV communication module 211 receives the request for the communication connection message from the mobile apparatus 100, the UPNP device manager 251 extracts a UUID from the corresponding message and retrieves the UUID from a UUID DB 241 stored in a TV storage 240. The UPNP device manager 251 directly approves of the communication connection of the mobile apparatus 100 if the UUID has been registered in the UUID DB 241, but displays the UI 410 (see FIG. 7) for a user if the UUID has not been registered in the UUID DB 241.

On the other hand, if the second TV communication module 212 receives the request for the communication connection message from the mobile apparatus 100, the Wi-Fi device manager 252 extracts a MAC address from the corresponding message and retrieves the MAC address from a MAC address DB 242 stored in the TV storage 240. The Wi-Fi device manager 252 directly approves of the communication connection of the mobile apparatus 100 if the MAC address has been registered in the MAC address DB 242, but displays the UI 410 (see FIG. 7) for a user if the MAC address has not been registered in the MAC address DB 242.

Thus, the manager and the DB in the TV 200 are divided based on the protocols. The protocols may be different in layers of the ISO model, formats of ID information, and content of the ID information even under the conditions of the same layer and the same format. Therefore, the TV has to determine the registration of the ID separately based on the protocols since ID information of a certain protocol does not include ID information of another protocol.

If the TV 200 receives a message of the request for the communication connection based on the Wi-Fi protocol from the mobile apparatus 100 in the state that the UUID of the mobile apparatus 100 has been registered in the UUID DB 241 but the MAC address of the mobile apparatus 100 has not been registered in the MAC address DB 242, the TV 200 is only allowed to retrieve the MAC address included in the message from the MAC address DB 242. Therefore, the TV 200 determines that the mobile apparatus 100 has not been registered even though the UUID has already been registered. Accordingly, the TV 200 displays the UI 410 (see FIG. 7) again for authenticating a user.

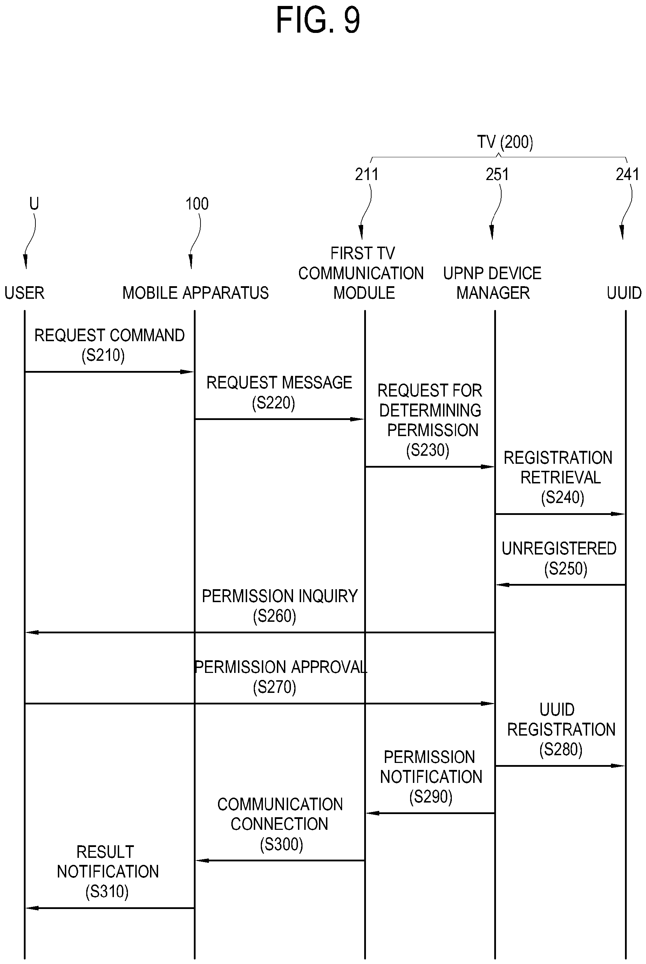

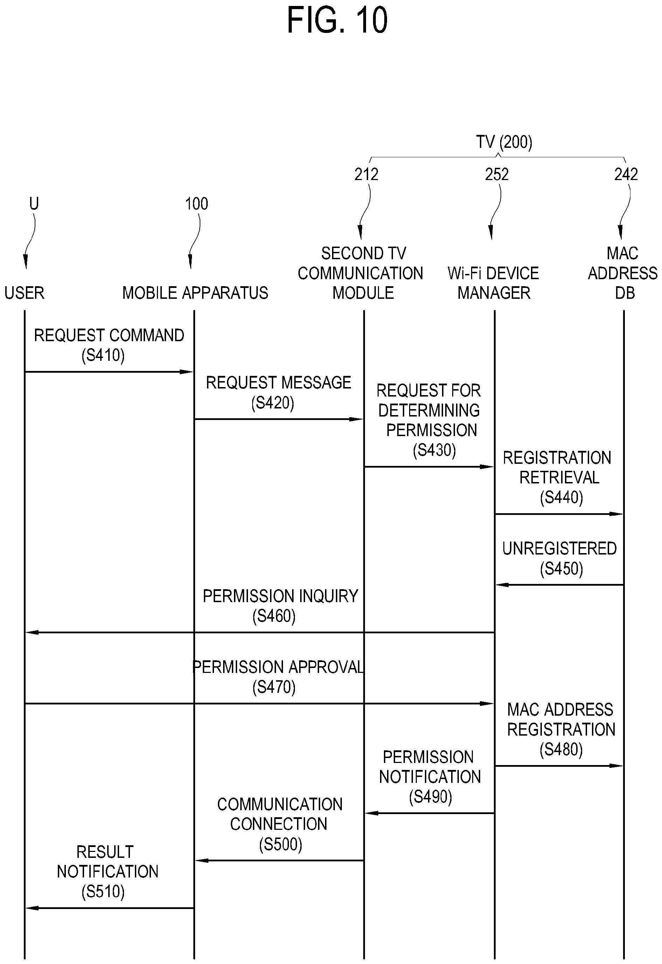

Below, it will be described with reference to FIG. 9 and FIG. 10 that the mobile apparatus 100 makes sequential requests for communication connection to the TV 200 through the UPNP protocol first and the Wi-Fi direct protocol second in the state that the mobile apparatus 100 has not been registered in the TV 200.

FIG. 9 and FIG. 10 are sequence diagrams illustrating example signal flows of when the mobile apparatus 100 makes requests for communication connection based on the UPNP protocol and the Wi-Fi direct protocol to the TV 200 in the state that the mobile apparatus 100 has not been registered in the TV 200. The procedure of FIG. 10 follows that of FIG. 9. For example, the procedure of FIG. 10 is performed after the procedure of FIG. 9.

FIGs. 9 and 10 illustrate that a single user uses both the mobile apparatus 100 and the TV 200, but is not limited thereto. There may be respective users of the mobile apparatus 100 and the TV 200. Arrows from a user U to the mobile apparatus 100 or the TV 200 refer to inputs of a user U toward the mobile apparatus 100 or the TV 200. Arrows from the mobile apparatus 100 or the TV 200 to a user U refer to display of an image by the mobile apparatus 100 or the TV 200 toward a user U or request for inputting a certain operation toward a user U.

As illustrated in FIG. 9, a user U may control the mobile apparatus 100 to request a communication connection based on the UPNP protocol to the TV 200 (S210).

The mobile apparatus 100 transmits a request message for the UPNP communication connection to the TV 200 in response to a command of a user U (S220).

The first TV communication module 211 transmits the UUID extracted from the message to the UPNP device manager 251, and makes a request for determining whether to permit the communication connection (S230).

The UPNP device manager 251 accesses the UUID DB 241 and retrieves the UUID of the mobile apparatus 100 from the UUID DB 241 (S240). If it is determined that the UUID has not been registered (S250), the UPNP device manager 251 makes a permission inquiry to a user U about whether to permit the communication connection of the mobile apparatus 100 (S260). This inquiry may, for example, be given to a user U in the form of the UI 410 (see FIG. 7).

A user U approves of the permission of the communication connection with the mobile apparatus 100 in response to the inquiry from the TV 200 (S270).

The UPNP device manager 251 registers the UUID of the mobile apparatus 100 to the UUID DB 241 in accordance with the approval of a user U (S280). The UPNP device manager 251 notifies the first TV communication module 211 of the permission of the communication connection with the mobile apparatus 100 (S290).

The first TV communication module 211 notifies the mobile apparatus 100 of the communication connection in accordance with the permission notification, and connects and communicates with the mobile apparatus 100 (S300).

Thus, the mobile apparatus 100 notifies a user of communicating and connecting with the TV 200 based on the UPNP (S310).

As illustrated in FIG. 10, a user U controls the mobile apparatus 100 to request a communication connection based on the Wi-Fi protocol to the TV 200 (S410).

The mobile apparatus 100 transmits a request message for the Wi-Fi communication connection to the TV 200 in response to a command of a user U (S420).

The second TV communication module 212 transmits the MAC address extracted from the message to the Wi-Fi device manager 252, and makes a request for determining whether to permit the communication connection (S430).

The Wi-Fi device manager 252 accesses the MAC address DB 242 and retrieves the MAC address of the mobile apparatus 100 from the MAC address DB 242 (S440). Since the MAC address of the mobile apparatus 100 has not been registered even though the UUID of the same mobile apparatus 100 has been registered in the foregoing procedure of FIG. 9, it is ultimately determined that the mobile apparatus 100 is not registered in the Wi-Fi protocol.

If it is determined that the MAC address has not been registered (S450), the Wi-Fi device manager 252 makes a permission inquiry to a user U about whether to permit the communication connection of the mobile apparatus 100 (S460). This inquiry is given to a user U in the form of the UI 410 (see FIG. 7). From a user's point of view, the same user verification is performed twice as the protocol is changed.

A user U approves of the permission of the communication connection with the mobile apparatus 100 in response to the inquiry from the TV 200 (S470).

The Wi-Fi device manager 252 registers the MAC address of the mobile apparatus 100 to the MAC address DB 242 in accordance with the approval of a user (S480). The Wi-Fi device manager 252 notifies the second TV communication module 212 of the permission of the communication connection with the mobile apparatus 100 (S490).

The second TV communication module 212 notifies the mobile apparatus 100 of the communication connection in accordance with the permission notification, and connects and communicates with the mobile apparatus 100 (S500).

Thus, the mobile apparatus 100 informs a user U of communicating and connecting with the TV 200 based on the Wi-Fi (S310).

In this example embodiment, the mobile apparatus 100 has to respectively perform the apparatus registration procedures for the communication connection with the TV 200 in accordance with the communication protocols, and a user has to perform an input each time for authenticating the request for the communication connection from the mobile apparatus 100. This may be inconvenient for a user of the mobile apparatus 100 and the TV 200.

A second example embodiment addressing such a problem of inconvenience will be described in greater detail below.

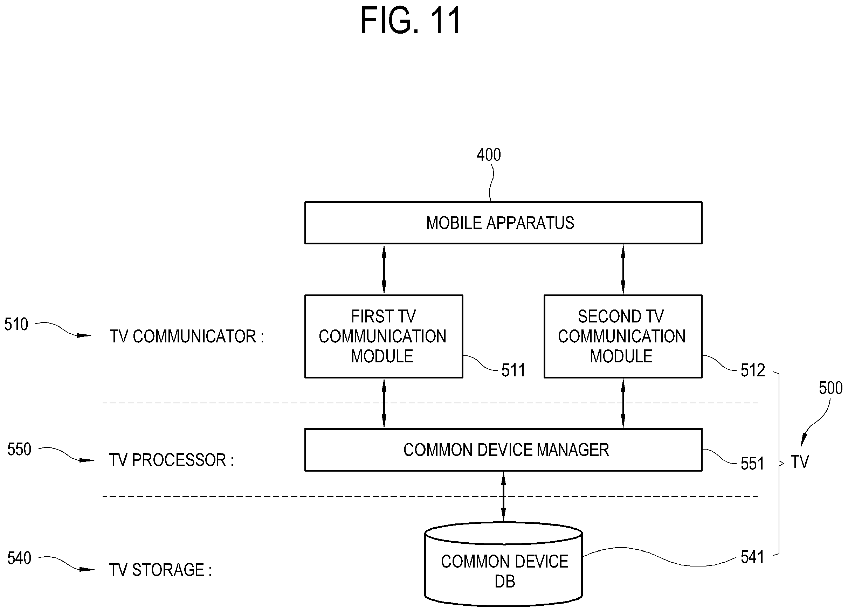

FIG. 11 is a diagram illustrating a principle of an example management system for communication connection in a TV 500;

As illustrated in FIG. 11, the mobile apparatus 400 can communicate with the TV 500.

The TV 500 may include, for example, a TV communicator (e.g., including communication circuitry) 510, a TV processor 550 and a TV storage 540. The TV communicator 510 may include, for example, a first TV communication module 511 and a second TV communication module 512. In terms of hardware, the mobile apparatus 400 and the TV 500 in this example embodiment are similar to those of the first example embodiment, and thus detailed descriptions thereof will be omitted.

In the second example embodiment, the first TV communication module 511 is based on the UPNP protocol, and the second TV communication module 512 is based on the Wi-Fi direct protocol. Of course, the TV communicator 510 may further include a communication module based on another protocol. However, only two protocols will be described as an example for ease and convenience of description.

The TV processor 550 includes a common device manager 551 that manages communication corresponding to the respective protocols. The common device manager 551 manages IDs corresponding to the respective protocols in a common device DB 541 of the TV storage 540. For example, the common device manager 551 may be configured to control both the request for the UPNP-based communication connection from the first TV communication module 511 and the request for the Wi-Fi direct-based communication connection from the second TV communication module 512. Further, the common device manager 551 may, for example, register and manage the UUID and the P2P device address of the mobile apparatus 400 in the common device DB 541.

With this structure, the mobile apparatus 400 and the TV 500 according to this example embodiment operate, for example, as follows.

When the mobile apparatus 400 sends a message requesting a communication connection based on a certain protocol to the TV 500, this message includes ID information of the mobile apparatus 400 with regard to all the protocols provided for communicating with the TV 500. Here, the "certain protocol" may, for example, be selected as one among various communication protocols, or at least two protocols may be selected. In this example embodiment, the Wi-Fi direct is selected. However, this is merely a non-limiting example, and another protocol may be selected.

For example, suppose that there are three protocols, such as UPNP, Wi-Fi and Wi-Fi direct as the protocol supported in common by the mobile apparatus 400 and the TV 500. When the mobile apparatus 400 sends a message of a request for Wi-Fi direct-based communication connection to the TV 500, the corresponding message described in the foregoing first example embodiment includes only a P2P device address based on Wi-Fi direct. However, according to this example embodiment, the message to be sent by the mobile apparatus 400 may include all a UUID based on UPNP, a MAC address based on Wi-Fi, and a P2P device address based on Wi-Fi direct.

The TV 500 retrieves IDs corresponding to the plurality of protocols, extracted from the message sent by the mobile apparatus 400, from the common device DB 541. If any one of the IDs corresponding to the respective protocols is retrieved from the common device DB 541, the TV 500 starts communicating and connecting with the mobile apparatus 400 without performing user approval with regard to the request for the communication connection from the mobile apparatus 400.

If there is no ID among the IDs corresponding to the respective protocols retrieved from the common device DB 541, the TV 500 registers these IDs to the common device DB 541, and performs the user approval with regard to the request for the communication connection from the mobile apparatus 400. If the user approval is obtained, the TV 500 performs the communication connection with the mobile apparatus 400.

Thus, when the communication connection between the mobile apparatus 400 and the TV 500 is performed by changing the protocol, it is possible to skip the procedure of the user approval with regard to the request for the communication connection based on the protocols, thereby improving a user's convenience.

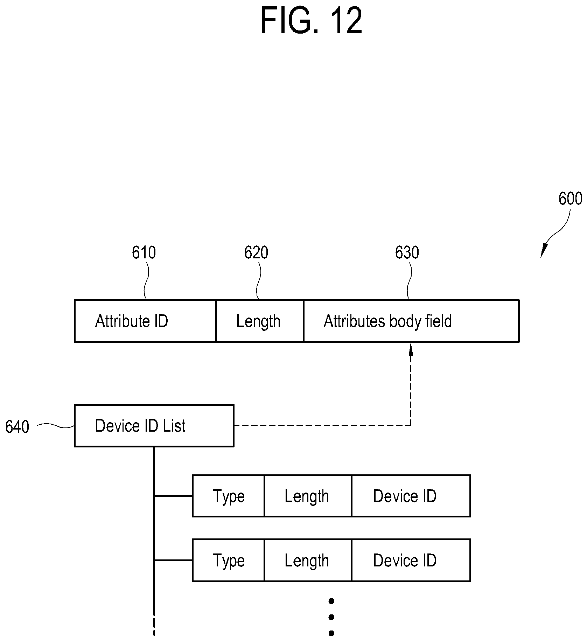

FIG. 12 is a diagram partially illustrating an example format of a request message 600 for Wi-Fi direct-based communication connection from the mobile apparatus 400.

As illustrated in FIG. 12, the message 600 may include, for example, an attribute ID 610 defining, for example, a type of P2P attribute, a length 620 of defining the length of data related to attribute information, and an attributes body field 630 in which data related to the attribute information is recorded.

According to this example embodiment, the mobile apparatus 400 records a device ID list 640, which has ID information corresponding to each protocol, in the attributes body field 630 of the message 600. The device ID list 640 has types and IDs of the respective protocols if the mobile apparatus 400 supports the plurality of protocols. The device ID list 640 includes fields of type, length and device ID with respect to each protocol, in which the type refers to a type of the protocol, the length refers to a data length of the device ID, and the device ID refers to the ID of the mobile apparatus 400 with regard to the protocol defined in the type.

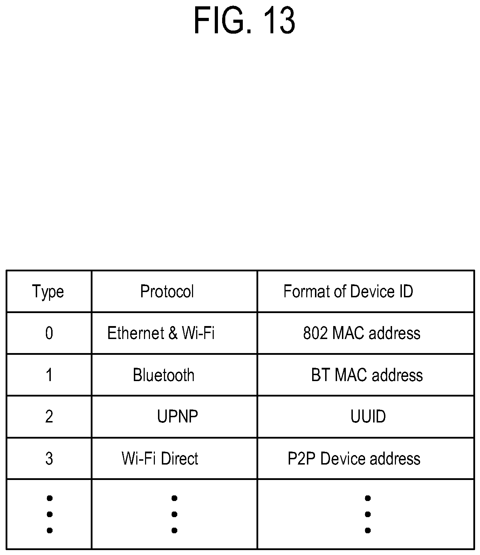

FIG. 13 is a diagram illustrating an example definition of the protocols and the device IDs.

As illustrated in FIG. 13, each protocol is previously defined with a type represented, for example, by a preset numeral, and a format of a device ID corresponding to the protocol. For example, if the type is '0' in the device ID list 640 (see FIG. 12), it indicates Ethernet or Wi-Fi protocol. If the type is '1,' it indicates Bluetooth. If the type is '2,' it indicates UPNP. If the type is '3,' it indicates Wi-Fi direct. This preset definition may be varied depending on design.

The format of the device ID may be defined based on the respective protocols. For example, if the type in the device ID list 640 (see FIG. 12) is '0,' the device ID of the corresponding type has a format of 802-based MAC address. Similarly, the device IDs have formats of BT MAC address in the type of '1', UUID in the type of '2,' and P2P device address in the type of '3.'

In such a manner, the TV 500 may obtain ID information corresponding to each protocol of the mobile apparatus 400 from the message.

Below, it will be described that the mobile apparatus 400 first makes a request for UPNP-based communication connection and then makes a request for Wi-Fi direct-based communication connection to the TV 500 in the state that the mobile apparatus 400 has not been registered to the TV 500.

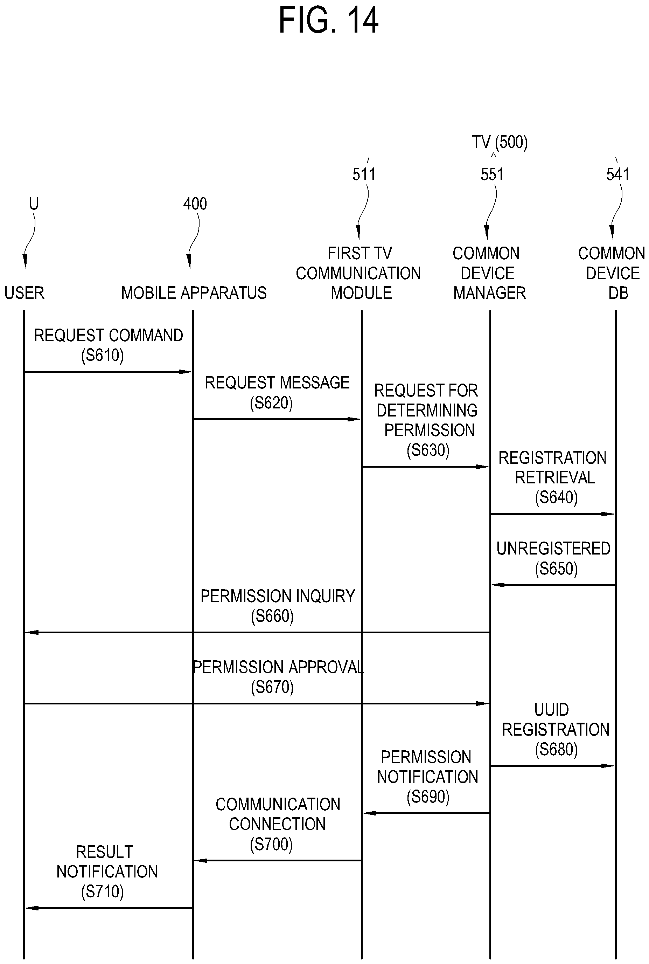

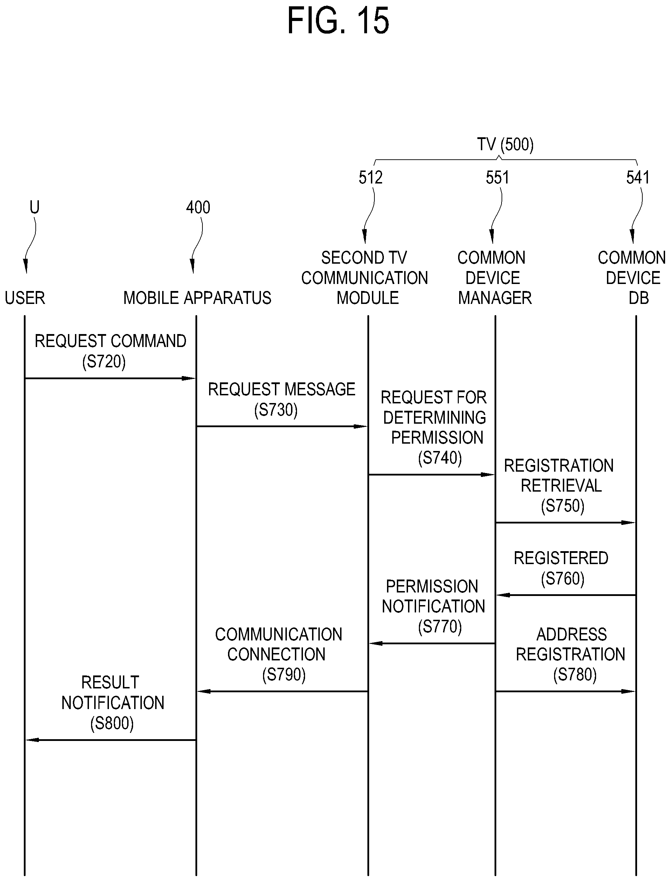

FIG. 14 and FIG. 15 are sequence diagrams illustrating example signal flows in which the mobile apparatus 400 makes sequential requests for communication connection based on UPNP and Wi-Fi direct to the TV 500 in the state that the mobile apparatus 400 has not been registered in the TV 500. The procedure of FIG. 15 follows that of FIG. 14. For example, the procedure of FIG. 15 is performed after the procedure of FIG. 14.

As illustrated in FIG. 14, a user U controls the mobile apparatus 400 to request a communication connection based on the UPNP protocol to the TV 500 (S610).

The mobile apparatus 400 transmits a message requesting UPNP communication connection to the TV 500 in response to a command of a user U (S620).

The first TV communication module 511 transmits the UUID extracted from the message to the common device manager 551, and makes a request for determining whether to permit the communication connection (S630).

The common device manager 551 accesses the common device DB 541 and retrieves the UUID of the mobile apparatus 400 from the common device DB 541 (S640). If it is determined that the UUID has not been registered (S650), the common device manager 551 makes a permission inquiry to a user U about whether to permit the communication connection of the mobile apparatus 100 (S660). This inquiry is provided to a user U in the UI 410 (see FIG. 7).

A user U grants permission of the communication connection with the mobile apparatus 400 in response to the inquiry from the TV 500 (S670).

The common device manager 551 registers the UUID of the mobile apparatus 400 in the common device DB 541 in accordance with the approval of a user U (S680). The common device manager 551 notifies the first TV communication module 511 of the permission of the communication connection with the mobile apparatus 400 (S690).

The first TV communication module 511 notifies the mobile apparatus 400 of the communication connection based on the permission notification, and connects and communicates with the mobile apparatus 400 (S700).

Thus, the mobile apparatus 400 informs a user U of the UPNP-based communication connection with the TV 500 (S710).

As illustrated in FIG. 15, a user U controls the mobile apparatus 400 to request a communication connection based on the Wi-Fi direct protocol to the TV 500 (S720).

The mobile apparatus 400 transmits a message of the request for the Wi-Fi direct communication connection to the TV 500 in response to a command of a user U (S730). The message of the mobile apparatus 400 includes not only the P2P device address based on Wi-Fi direct, but also ID information of all the protocols supportable by the mobile apparatus 400. For example, the mobile apparatus 400 transmits the message with the P2P device address based on Wi-Fi direct and the UUID based on UPNP.

The second TV communication module 512 transmits the UUID extracted from the message to the common device manager 551, and makes a request for determining whether to permit the communication connection (S740).

The common device manager 551 accesses the common device DB 541 and retrieves the UUID and P2P device address of the mobile apparatus 400 from the common device DB 541 (S750). In this example embodiment, the P2P device address of the mobile apparatus 400 has not been registered in the common device DB 541, whereas the UUID of the mobile apparatus 400 has been registered as described in the operation S680 of FIG. 14.

Thus, the common device manager 551 determines that the mobile apparatus 400 has been registered (S760). Therefore, the common device manager 551 does not make a permission inquiry to the user U about whether to permit the communication connection of the mobile apparatus 100, and directly notifies the second TV communication module 512 of the permission of the communication connection with the mobile apparatus 400 (S770). The common device manager 551 registers the P2P device address of the common device DB 541 in the mobile apparatus 400 (S780).

The second TV communication module 512 notifies the mobile apparatus 400 of the communication connection based on the permission notification, and connects and communicates with the mobile apparatus 400 based on Wi-Fi direct (S790).

Thus, the mobile apparatus 400 informs a user U of the Wi-Fi direct-based communication connection with the TV 500 (S800).

Below, it will be described that the mobile apparatus 400 first makes a request for Wi-Fi direct-based communication connection and then makes a request for UPNP-based communication connection to the TV 500 in the state that the mobile apparatus 400 has not been registered to the TV 500.

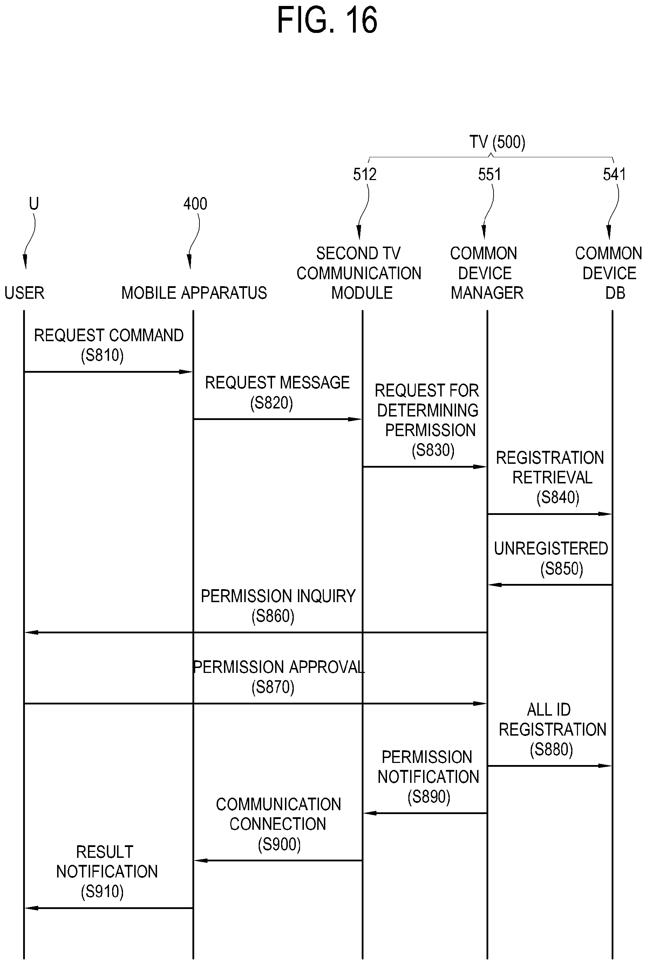

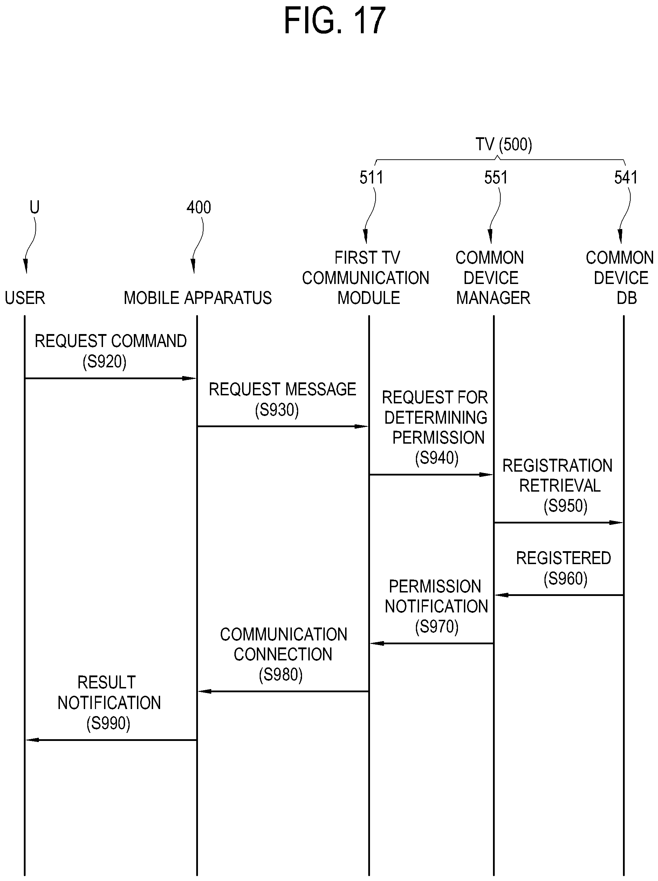

FIG. 16 and FIG. 17 are sequence diagrams illustrating example signal flows in which the mobile apparatus 400 makes sequential requests for communication connection based on Wi-Fi direct and UPNP to the TV 500 in the state that the mobile apparatus 400 has not been registered in the TV 500, according to the second example embodiment. The procedure of FIG. 17 follows that of FIG. 16. For example, the procedure of FIG. 17 is performed after the procedure of FIG. 16.

As illustrated in FIG. 16, a user U controls the mobile apparatus 400 to request a communication connection based on the Wi-Fi direct protocol to the TV 500 (S810).

The mobile apparatus 400 transmits a message of the request for the Wi-Fi direct communication connection to the TV 500 in response to a command of a user U (S820). The message of the mobile apparatus 400 includes not only the P2P device address based on the Wi-Fi direct, but also ID information of all the protocols supportable by the mobile apparatus 400. For example, the message to be sent by the mobile apparatus 400 includes the P2P device address based on the Wi-Fi direct and the UUID based on the UPNP.

The second TV communication module 512 transmits the UUID and the P2P device address, extracted from the message to the common device manager 551, and makes a request for determining whether to permit the communication connection (S830).

The common device manager 551 accesses the common device DB 541 and retrieves the UUID or the P2P device address the mobile apparatus 400 from the common device DB 541 (S840). Neither the UUID nor the P2P device address of the mobile apparatus 400 is registered in the common device DB 541, and thus the common device manager 551 determines that the mobile apparatus 400 has not been registered (S850).

The common device manager 551 makes a permission inquiry to a user U about whether to permit the communication connection with the mobile apparatus 400 (S860). This inquiry is provided to a user U in the form of the UI 410 (see FIG. 7).

A user U approves of the permission of the communication connection with the mobile apparatus 400 in response to the inquiry from the TV 500 (S870).

The common device manager 551 registers all the ID information of the mobile apparatus 400, e.g., the P2P device address and the UUID to the common device DB 541 based on the approval of a user U (S880). The common device manager 551 notifies the second TV communication module 512 of the permission of the communication connection with the mobile apparatus 400 (S890).

The second TV communication module 512 notifies the mobile apparatus 400 of the communication connection based on the permission notification, and connects and communicates with the mobile apparatus 400 based on Wi-Fi direct (S900).

Thus, the mobile apparatus 400 informs a user U of the Wi-Fi direct-based communication connection with the TV 500 (S910).

As illustrated in FIG. 17, a user U controls the mobile apparatus 400 to request a communication connection based on the UPNP protocol to the TV 500 (S920).

The mobile apparatus 400 transmits a message of the request for the UPNP communication connection to the TV 500 in response to a command of a user U (S930).

The first TV communication module 511 transmits the UUID extracted from the message to the common device manager 551, and makes a request for determining whether to permit the communication connection (S940).

The common device manager 551 accesses the common device DB 541 and retrieves the UUID of the mobile apparatus 400 from the common device DB 541 (S950). Since the UUID has already been registered in the foregoing operation S880 of FIG. 16, the common device manager 551 determines that the mobile apparatus 400 has been registered (S960). Thus, the common device manager 551 does not make a permission inquiry of a user U about whether to permit the communication connection with the mobile apparatus 400, and directly notifies the first TV communication module 511 of the permission of the communication connection with the mobile apparatus 400 (S970).

The first TV communication module 511 notifies the mobile apparatus 400 of the communication connection based on the permission notification, and connects and communicates with the mobile apparatus 400 (S980).

Thus, the mobile apparatus 400 informs a user U of the UPNP-based communication connection with the TV 500 (S990).

According to an example embodiment, the message requesting a communication connection based on at least one protocol among the plurality of protocols for communication between the mobile apparatus 400 and the TV 500 is sent including ID information corresponding to the plurality of protocols. Thus, a user does not have to individually approve of the requests for the communication connection corresponding to the respective protocols, thereby solving problems of inconvenience.

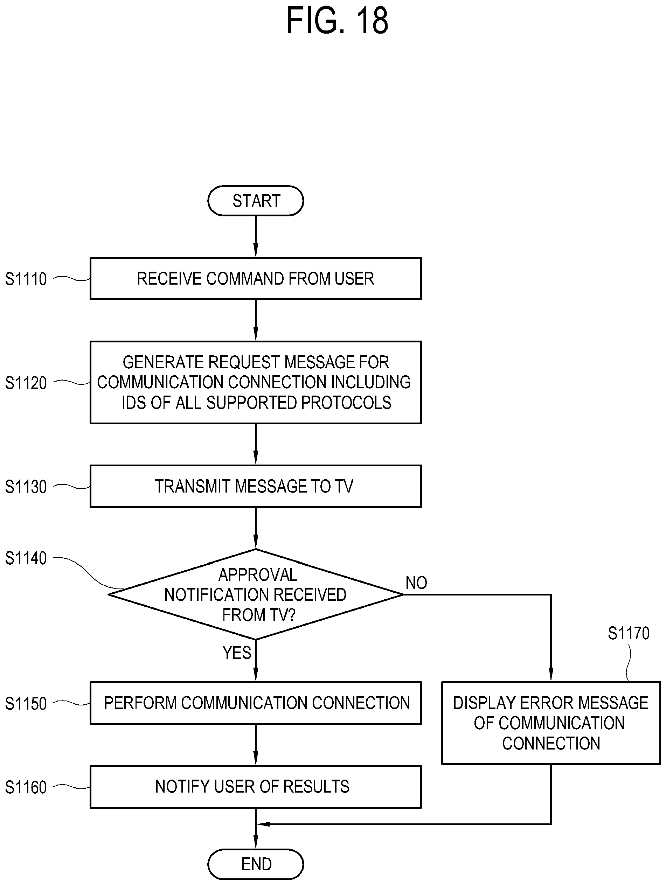

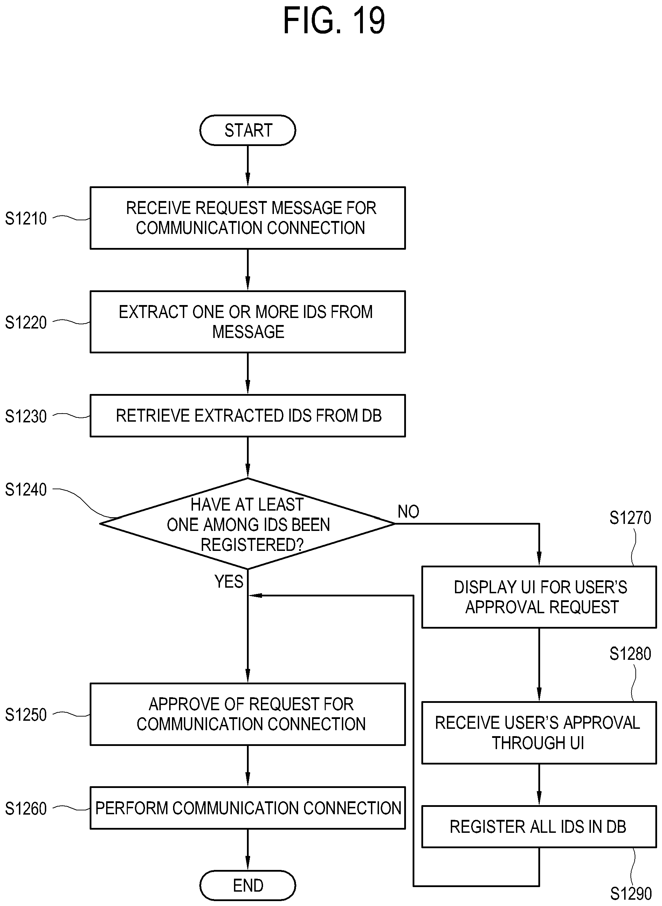

Below, a control method of the mobile apparatus 400 and the TV 500 according to an example embodiment will be described with reference to FIG. 18 and FIG. 19.

FIG. 18 is a flowchart illustrating an example control method of the mobile apparatus 400.

As illustrated in FIG. 18, at operation S1110 the mobile apparatus 400 receives a user's command to connect and communicate with the TV 500 in accordance with a preset protocol.

At operation S1120 the mobile apparatus 400 generates a message of making a request for communication connection, the message including ID information corresponding to all the supported protocols.

At operation S1130 the mobile apparatus 400 transmits the generated message to the TV 500.

At operation S1140 the mobile apparatus 400 determines whether approval notification of the communication connection is received from the TV 500.

If it is determined in the operation S1140 that the approval notification of the communication connection is received from the TV 500, at operation S1150 the mobile apparatus 400 performs the communication connection based on the corresponding protocol. Further, at operation S1160 the mobile apparatus 400 notifies a user of a result from the communication connection.
if it is determined in the operation S1140 that the approval notification of the communication connection is not received from the TV 500 within a preset period of time, at operation S1170 the mobile apparatus 400 displays a message of a communication connection error.

FIG. 19 is a flowchart illustrating an example control method of the TV 500.

As illustrated in FIG. 19, at operation S1210 the TV 500 receives a request message for the communication connection corresponding to a certain protocol from the mobile apparatus 400.

At operation S1220 the TV 500 extracts at least one piece of ID information of the mobile apparatus 400 from the received message.

At operation S1230 the TV 500 retrieves the extracted ID from an ID registration DB.

At operation S1240 the TV 500 determines whether at least one of extracted IDs has been registered in the ID registration DB.

If it is determined that at least one of the extracted IDs has been registered, at operation S1250 the TV 500 approves of the request for the communication connection from the mobile apparatus 400. In the operation S1260, the TV 500 performs the communication connection with the mobile apparatus 400 based on the corresponding protocol.

If it is determined that no ID has been registered, at operation S1270 the TV 500 displays a UI of requesting a user's approval with respect to the request for the communication connection from the mobile apparatus 400. At operation S1280 the TV 500 receives a user's approval through the displayed UI.

In accordance with a user's approval, the TV 500 registers all the extracted IDs in the ID registration DB at operation S1290, and goes to the operation S1250.

In the foregoing example embodiment, the mobile apparatus sends the request message for communication connection based on a certain protocol such as Wi-Fi direct, in which the message involves the IDs of all the protocols supportable by the mobile apparatus. However, the disclosure is not limited to this example embodiment. For example, the message to be sent by the mobile apparatus may involve IDs of not all the supportable protocols but some supportable protocols.

The mobile apparatus may have a unique ID recognizable by the TV, and the message may include the unique ID of the mobile apparatus. Below, this case will be described.

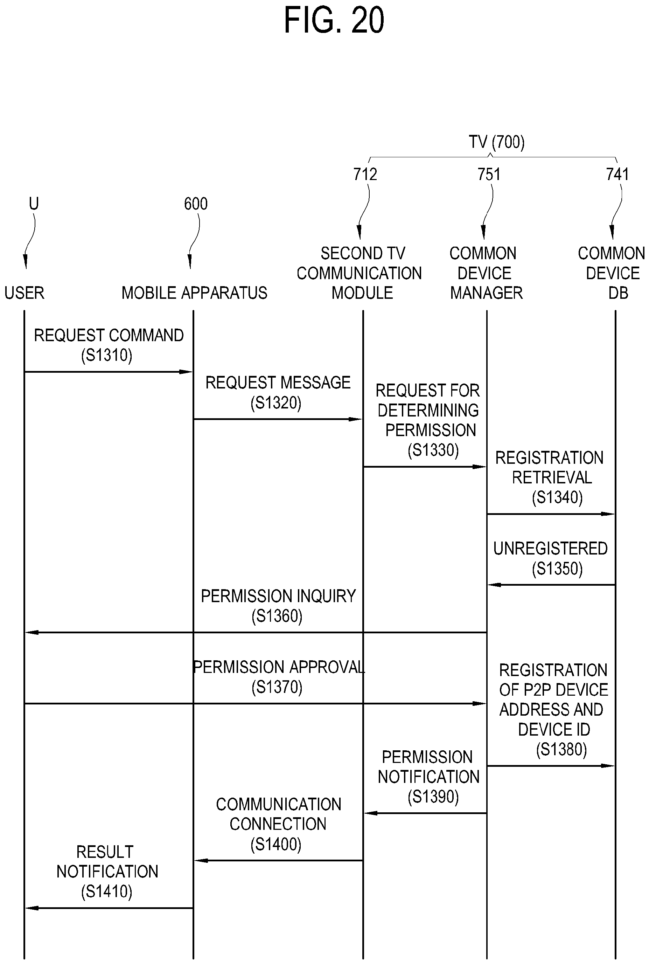

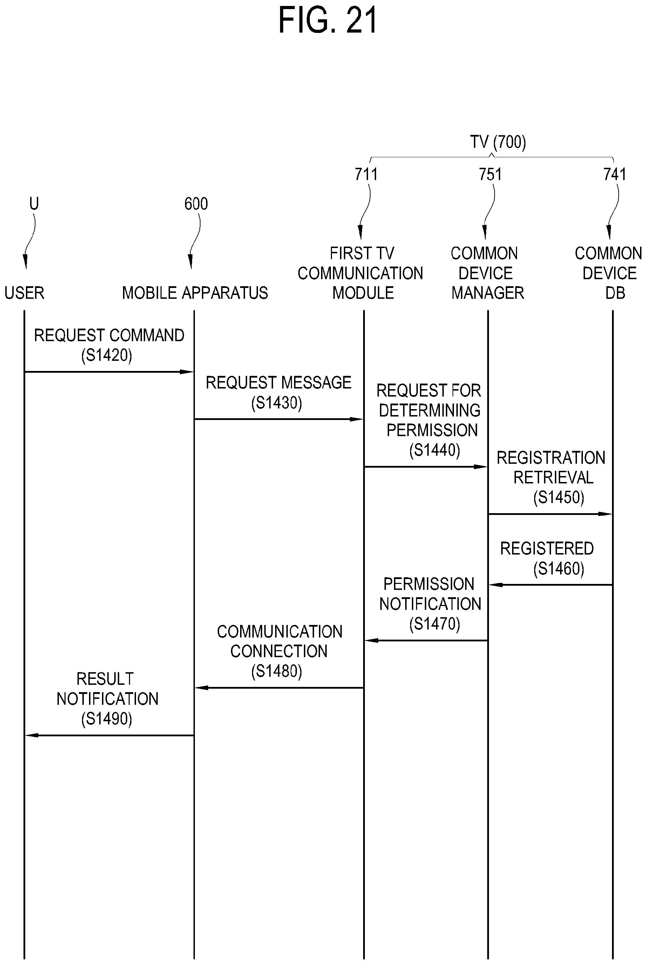

FIG. 20 and FIG. 21 are sequence diagrams illustrating example signal flows when a mobile apparatus 600 makes sequential requests for the Wi-Fi direct-based communication connection and the UPNP-based communication connection to a TV 700 in the state that the mobile apparatus 600 has not been registered in the TV 700.

The mobile apparatus 600 and the TV 700 in this example embodiment are similar to those of the foregoing example embodiment, and therefore repetitive descriptions thereof will be omitted.

As illustrated in FIG. 20, a user U controls the mobile apparatus 600 to request a communication connection based on the Wi-Fi direct protocol to the TV 700 (S1310).

The mobile apparatus 600 transmits a request message for the Wi-Fi direct communication connection to the TV 700 in response to a command of a user U (S1320). The request message of the mobile apparatus 600 includes the unique ID information of the mobile apparatus 600 as well as the P2P device address based on the Wi-Fi direct.

The unique ID of the mobile apparatus 600 may not be the same as the ID corresponding to the communication protocol but a device ID given to the mobile apparatus 600 itself. For example, the unique ID may include a model number of an apparatus, a serial number, a serial number of a CPU, a network account of the mobile apparatus 600, etc.

The second TV communication module 712 transmits the P2P device address and the device ID extracted from the message to the common device manager 751, and makes a request for determining whether to permit the communication connection (S1330).

The common device manager 751 accesses the common device DB 741 and retrieves the P2P device address and the device ID of the mobile apparatus 600 from the common device DB 741 (S1340). Neither the P2P device address or the device ID of the mobile apparatus 600 are registered in the common device DB 741, and therefore the common device manager 751 determines that the mobile apparatus 600 has not been registered (S1350).

Thus, the common device manager 751 makes a permission inquiry to a user U about whether to permit the communication connection of the mobile apparatus 600 (S1360).

A user U approves of permission of the communication connection with the mobile apparatus 600 in response to the inquiry from the TV 700 (S1370).

The common device manager 751 registers the P2P device address and the device ID of the mobile apparatus 600 to the common device DB 741 in accordance with the approval of a user U (S1380). The common device manager 751 notifies the second TV communication module 712 of the permission of the communication connection with the mobile apparatus 600 (S1390).

The second TV communication module 712 notifies the mobile apparatus 600 of the communication connection in accordance with the permission notification, and connects and communicates with the mobile apparatus 600 based on Wi-Fi direct (S1400).

Thus, the mobile apparatus 600 notifies a user U of the communication connection based on Wi-Fi direct with the TV 700 (S1410).

As illustrated in FIG. 21, a user U controls the mobile apparatus 600 to request a communication connection based on the UPNP protocol to the TV 700 (S1420).

The mobile apparatus 600 transmits a request message of the request for the UPNP communication connection to the TV 700 in response to a command of a user U (S1430). The message of the mobile apparatus 600 includes the UUID and the device ID.

The first TV communication module 711 transmits the UUID extracted from the message to the common device manager 751, and makes a request for determining whether to permit the communication connection (S1440).

The common device manager 751 accesses the common device DB 241 and retrieves the UUID or the device ID of the mobile apparatus 600 from the common device DB 741 (S1450). Since the device ID has already been registered in the foregoing operation S1380 of FIG. 20 even through the UUID has not been registered, the common device manager 751 determines that the mobile apparatus 600 has registered (S1460). Therefore, the common device manager 751 does not make a permission inquiry to a user U about whether to permit the communication connection with the mobile apparatus 600, and directly notifies the first TV communication module 711 of the permission of the communication connection with the mobile apparatus 600 (S1470).

The first TV communication module 711 notifies the mobile apparatus 600 of the permission of the communication connection in accordance with the permission notification, and connects and communicates with the mobile apparatus 600 (S1480).

Thus, the mobile apparatus 600 informs a user U of the communication connection with the TV 700 based on UPNP (S1490).

According to this example embodiment, the message of the request for communication connection according to all the protocols includes at least one device ID in addition to the IDs corresponding to the protocols. For example, the message of the mobile apparatus 600 includes the P2P device address and the device ID when the request is made for the communication connection based on Wi-Fi direct. Further, the message of the mobile apparatus 600 includes the UUID and the device ID when the request is made for the communication connection based on UPNP. After the first user approval is performed with regard to a certain protocol, the TV 700 does not have to undergo the procedure of the user approval with regard to the other protocols since the message corresponding to each protocol includes at least common device ID. Thus, it is possible to improve use convenience of the mobile apparatus 600 and the TV 700.

Below, a control method of the mobile apparatus 600 and the TV 700 according to an example embodiment will be described.

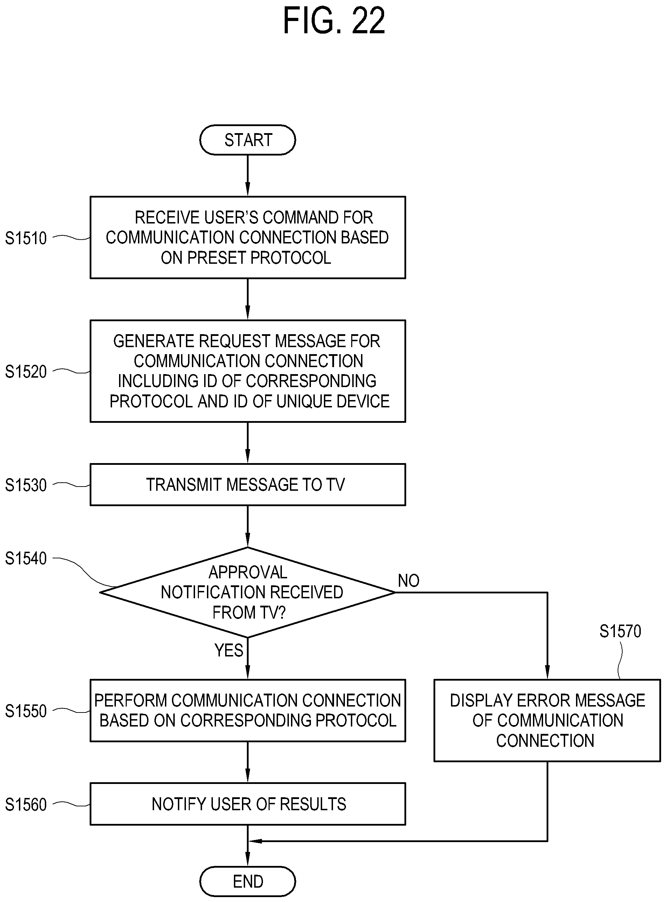

FIG. 22 is a flowchart illustrating an example control method of the mobile apparatus 600.

As illustrated in FIG. 22, at S1510 the mobile apparatus 600 receives a user's command for communication connection with the TV 700 based on a preset protocol.

At operation S1520 the mobile apparatus 600 generates a request message for a communication connection, in which the message includes a unique device ID of the mobile apparatus 600 regardless of the kind of protocols. In this operation, the mobile apparatus 600 may include an ID corresponding to a protocol to the message.

At operation S1530 the mobile apparatus 600 transmits the corresponding message to the TV 700.

At operation S1540 the mobile apparatus 600 determines whether approval notification of communication connection is received from the TV 700.

If it is determined in the operation S1540 that the approval notification of the communication connection is received from the TV 700, at operation S1550 the mobile apparatus 600 performs the communication connection in accordance with the corresponding protocol. Then, at operation S1560 the mobile apparatus 600 notifies a user of results from the communication connection.

If it is determined in operation S1540 that the approval notification of the communication connection is not received from the TV 700 within a preset period of time, at operation S1570 the mobile apparatus 600 displays an error message of the communication connection.

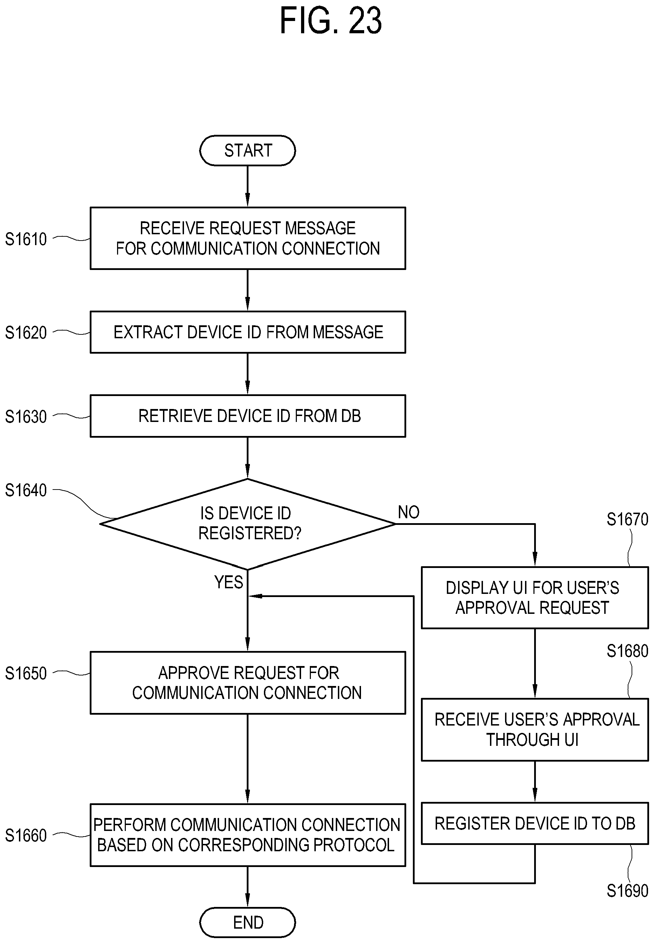

FIG. 23 is a flowchart illustrating an example control method of the TV 700.

As illustrated in FIG. 23, at operation S1610 the TV 700 receives a request message for a communication connection based on a certain protocol from the mobile apparatus 600.

At operation S1620 the TV 700 extracts information about device ID from the corresponding message. In this operation, the TV 700 may additionally extract the ID information corresponding to the protocol from the message.

At operation S1630 the TV 700 retrieves the extracted device ID from the ID registration DB.

At operation S1640 the TV 700 determines whether the extracted device ID has been registered in the ID registration DB. In this operation, if it is determined that the device ID has not been registered, the TV 700 may additionally retrieve the ID corresponding to the protocol, extracted from the message.

If it is determined that the device ID has been registered, at operation S1650 the TV 700 approves of the request for communication connection with the mobile apparatus 600. Further, at operation S1660 the TV 700 performs the communication connection with the mobile apparatus 600 based on the corresponding protocol.

If it is determined that the device ID has not been registered, at operation S1670 the TV 700 displays a UI for user's approval request with regard to the request for the communication connection with the mobile apparatus 600. At operation S1680 the TV 700 receives the user approval through the UI.

In accordance with the user approval, at operation S1690 the TV 700 registers the device ID in the ID registration DB, and the TV 700 goes to the operation S1650 In the operation S1690, the TV 700 may additionally register the ID corresponding to the protocol to the ID registration DB.

If it is determined that the device ID has not been registered but the ID corresponding to the protocol has been registered, the TV 700 skips the operations S1670 and S1680, and directly moves from the operation S1640 to the operation S1690.

In the foregoing example embodiments, the mobile apparatus sends the TV the message of the request for the communication connection based on a certain protocol, in which the message includes ID information of the corresponding protocol and ID information of the other protocol.

The TV may obtain the ID information corresponding to each protocol of the mobile apparatus by another method instead of the message of the request for the communication connection from the mobile apparatus.

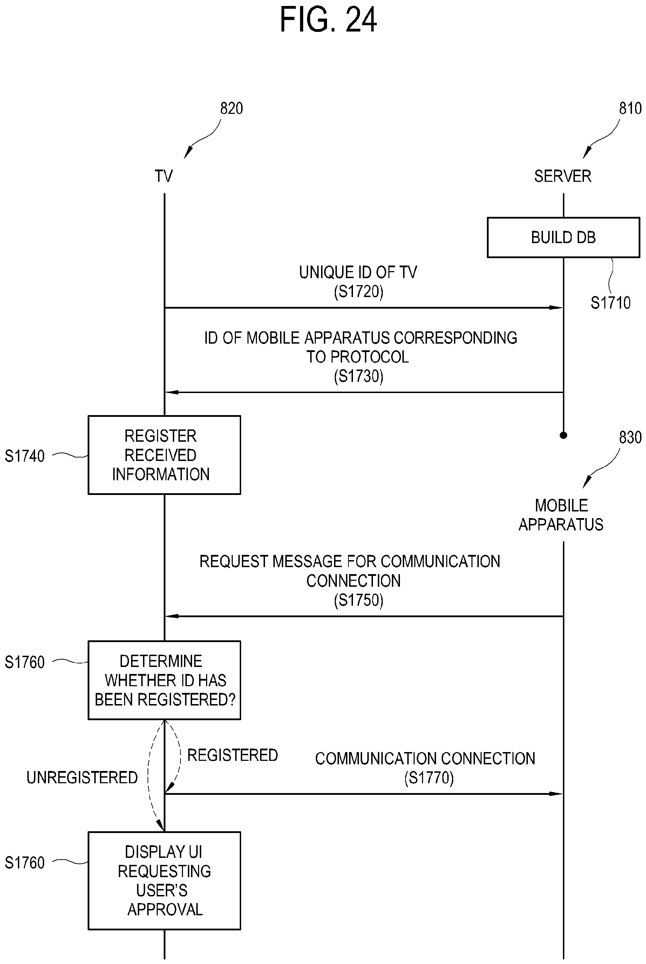

FIG. 24 is a sequence diagram illustrating example signal flows of when a TV 820 approves the communication connection with a mobile apparatus 830.

As illustrated in FIG. 24, a server 810 builds and stores a database in which ID information corresponding to protocols of various apparatuses such as the mobile apparatus 830 is registered (S1710). Such a database may be variously built. For example, the mobile apparatus 830 may transmit the corresponding information to the server 810, or a user of the mobile apparatus 830 may register the corresponding information to the server 810 through a computer (not shown) or the like. This ID information of the mobile apparatus 830 may be stored in association with other apparatuses in the database. For example, the mobile apparatus 830 and the TV 820 may be previously registered as apparatuses related to each other.

The TV 820 accesses the server 810 and obtains ID information according to previously registered protocols of the mobile apparatus 830. When the TV 820 makes a request for the corresponding information to the server 810, the TV 820 transmits its unique ID information to the server 810 (S1720) and receives ID information according to protocols of the mobile apparatus 830 corresponding to the unique ID information of the TV 820 from the server 810 (S1730). The TV 820 registers the corresponding information received from the server 810 (S1740).

The mobile apparatus 830 transmits a request message for a communication connection based on a certain protocol to the TV 820 (S1750). The corresponding message includes the ID information of the protocol and does not include ID information of the other protocols.

The TV 820 extracts ID information from the message received from the mobile apparatus 830, and determines whether the corresponding ID has be registered or not based on the information received and stored from the server 810 (S1760). The TV 820 performs communication connection if it is determined that the extracted ID information has been registered (S1770), but displays a UI requesting a user's approval if it is determined that the extracted ID information has not been registered (S1780).

The message of the request for the communication connection, which is transmitted from the mobile apparatus to the TV, may be not the ID information corresponding to the other protocols but different information recognizable by the TV.

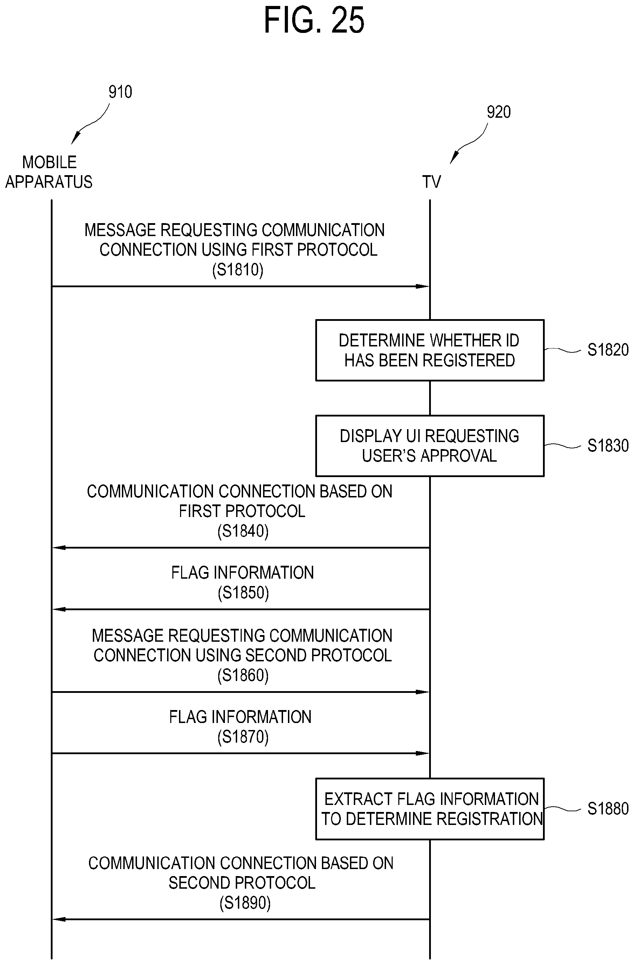

FIG. 25 is a sequence diagram illustrating example signal flows of when a TV 920 approves of communication connection with a mobile apparatus 910.

As illustrated in FIG. 25, the mobile apparatus 910 sends the TV 920 a message requesting a communication connection based on a first protocol (S1810). This message includes ID information based on the first protocol.

The TV 920 extracts the ID information based on the first protocol from the message of the mobile apparatus 910, and determines whether the corresponding ID has been registered or not (S1820). If it is determined that the corresponding ID has not been registered, the TV 920 displays a UI for a user's approval request (S1830).

The TV 920 performs the first protocol-based communication connection with the mobile apparatus 910 in accordance with a user's approval input through the UI (S1840). Further, the TV 920 transmits preset flag information to the mobile apparatus 910 (S1850). The flag information may refer to information to be transmitted for the communication connection from the TV 920 to the approved apparatus, in which there are no limits to the format and contents of information. For example, the flag information may include the unique ID of the TV and information indicating the approval of the communication connection. The flag information is information generated by the TV 920 itself or previously stored information, which can be determined by the TV 920 in the future.

The mobile apparatus 910 sends the TV 920 a message requesting communication connection based on a second protocol (S1860). This message includes ID information based on the second protocol. The mobile apparatus 910 sends the message together with the flag information received from the TV 920 in the previous operation S1850 (S1870). This flag information is information received regardless of the protocols when the request for the communication connection from the mobile apparatus 910 is approved by the TV 920.

The TV 920 extracts the flag information from the message, and determines whether the communication connection of the mobile apparatus 910 has already been approved based on the flag information (S1880). This determination is performed before determining whether the ID corresponding to the second protocol extracted from the message has been registered. If it is determined that the communication connection with the mobile apparatus 910 has been approved, it is not determined whether the ID corresponding to the second protocol has been registered. If the flag information is not extracted from the message, the TV 920 determines whether the ID corresponding to the second protocol has been registered.

The TV 920 performs the second protocol-based communication connection with the mobile apparatus 910 (S1890). Thus, the TV 920 may automatically approve of the second protocol-based communication connection without displaying the UI for the user's approval request.

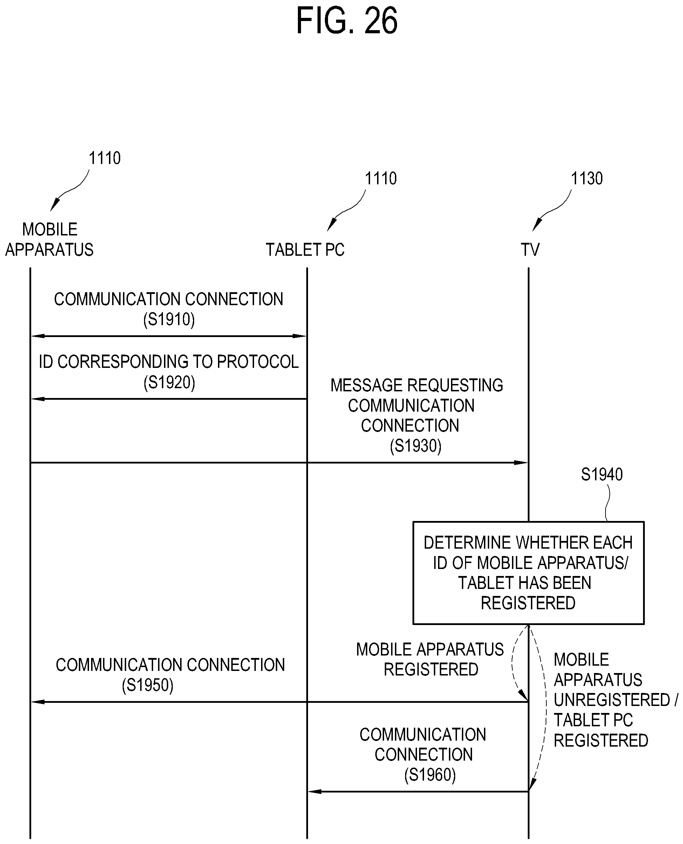

In the foregoing example embodiments, the mobile apparatus communicates with the TV, but not limited thereto. Alternatively, the mobile apparatus may communicate with other apparatuses. For example, if the mobile apparatus makes a request for communication connection with the TV in the state that the mobile apparatus connects and communicates with the tablet PC, a user may want both the mobile apparatus and the tablet to connect and communicate with the TV. This case will be described with reference to FIG. 26.

The mobile apparatus, the tablet PC and the TV are just examples of the devices for communication, and this example embodiment is not limited to the kinds of devices.

FIG. 26 is a sequence diagram illustrating example signal flows of when a TV 1130 approves the communication connection with a mobile apparatus 1110.

As illustrated in FIG. 26, in the state that the mobile apparatus 1110 connects and communicates with a tablet PC 1120 through a protocol (S1910), the mobile apparatus 1110 obtains and stores ID information according to the protocols of the tablet PC 1120 (S1920). The ID information according to the protocols of the tablet PC 1120 obtained by the mobile apparatus 1110 includes ID information corresponding to all the protocols supportable by the tablet PC 1120, and may also include ID information of a protocol not supported by the mobile apparatus 1110.

The mobile apparatus 1110 transmits a message requesting a communication connection based on a certain protocol to the TV 1130 (S1930). The message includes ID information according to the respective protocols of the mobile apparatus 1110, and ID information according to the respective protocols of the tablet PC 1120.

The TV 1130 extracts the ID information according to the respective protocols of the mobile apparatus 1110 and the ID information according to the respective protocols of the tablet PC 1120 from the message, and determines whether each ID has been registered (S1940).

If it is determined that the ID of the mobile apparatus 1110 has been registered, the TV 1130 performs the communication connection with the mobile apparatus 1110 based on the corresponding protocol (S1950). If it is determined that the ID of the mobile apparatus 1110 has not been registered, the TV 1130 displays a UI for a user's approval request for the communication connection with the mobile apparatus 1110.

In addition, if it is determined that the ID of the tablet PC 1120 has been registered, the TV 1130 performs the communication connection with the tablet PC 1120 based on the corresponding protocol (S1960). On the other hand, if it is determined that the ID of the tablet PC 1120 has not been registered, the TV 1130 may display a UI for a user's approval request with regard to the tablet PC 1120 or automatically blocks the communication connection with the tablet PC 1120.

In this example, as the mobile apparatus 1110 makes a request for communication connection with the TV 1130 based on a certain protocol, each of the mobile apparatus 1110 and the tablet PC 1120 can connect and communicate with the TV 1130 even though the tablet PC 1120 does not send a message of a request for communication connection to the TV 1130. Thus, it is convenient for a user who uses both the mobile apparatus 1110 and the tablet PC 1120.

The methods according to the foregoing example embodiments may be achieved in the form of a program command that can be implemented in various computers, and recorded in a computer readable medium. Such a computer readable medium may include a program command, a data file, a data structure or the like, or combination thereof. For example, the computer readable medium may be stored in a voltage or nonvolatile storage such as a read only memory (ROM) or the like, regardless of whether it is deletable or rewritable, for example, a RAM, a memory chip, a device or integrated circuit (IC) like memory, or an optically or magnetically recordable or machine (e.g., a computer)-readable storage medium, for example, a compact disk (CD), a digital versatile disk (DVD), a magnetic disk, a magnetic tape or the like. It will be appreciated that a memory, which can be included in a mobile terminal, is an example of the machine-readable storage medium suitable for storing a program having instructions for realizing the example embodiments. The program command recorded in this storage medium may be specially designed and configured according to the example embodiments, or may be publicly known and available to those skilled in the art of computer software.

## Claims

1. An image processing apparatus (200) comprising:
a communication circuitry (210) configured to perform communication based on one selected communication protocol from among a plurality of communication protocols;
a storage (240) configured to register identification, ID, information associated with respective communication protocols of an device ID of an external apparatus; and
at least one processor (250) configured: if a request for a communication connection using a first protocol of the plurality of communication protocols is received from the external apparatus (100), the request comprising a device ID and a first ID corresponding to the first protocol and a second ID corresponding to a second protocol different from the first protocol, to determine whether the first ID in the request is identified in IDs corresponding to the first protocol registered in the storage;
if the first ID and the device ID in the request are identified in IDs corresponding to the first protocol, to permit the communication connection based on the first protocol between the image processing apparatus (200) and an external apparatus ;
if the first ID and the device ID in the request are not identified in IDs corresponding to the first protocol registered in the storage (240), to determine whether the second ID in the request is identified in IDs corresponding to the second protocol registered in the storage (240); and
if the second ID and the device ID in the request are identified in IDs corresponding to the second protocol, to permit the communication connection based on the first protocol between the image processing apparatus (200) and the external apparatus to register the first ID extracted from the request in the IDs corresponding to the first protocol in the storage (240).

2. The image processing apparatus (200) according to claim 1, wherein if the second ID in the request is not identified in IDs corresponding to the second protocol registered in the storage (240), the at least one processor (250) is configured to display a user interface (230), referred to hereinafter as "a Ul", configured for a user selection of whether to approve the communication connection using the first protocol.

3. The image processing apparatus (200) according to claim 1, further comprising a display (220),
wherein if it is determined that any one of the first ID and the second ID is not registered in the storage (240), the at least one processor (250) is configured to control the display (220) to display a UI (230) through which a selection of whether to approve the request for the communication connection can be made.

4. The image processing apparatus according to claim 3, wherein the at least one processor (250) is configured to register the first ID and the second ID, said first ID and said second ID being extracted from the request, in the storage (240) if an approval selected through the UI (230) is received, and to permit the communication connection using the first protocol.

5. The image processing apparatus according to claim 4, wherein the at least one processor (250) is configured to block the communication connection using the first protocol if a disapproval selected through the UI (230) is received.

6. The image processing apparatus according to claim 1, wherein the request comprises ID information of the external apparatus (100) of all the communication protocols for communication between the external apparatus (100) and the communication circuitry (210).

7. The image processing apparatus according to claim 1, wherein the plurality of communication protocols comprises at least one of wireless fidelity (Wi-Fi), Wi-Fi direct, universal plug and play (UPNP), Bluetooth and near-field communication (NFC).

8. A method of controlling an image processing apparatus, comprising:
receiving a request for a communication connection from an external apparatus based on a first protocol, the request comprising a first identification, ID, associated with the first protocol and a second ID associated with a second protocol different from the first protocol from among a plurality of communication protocols (S110); and
determining whether the first ID in the request is identified in IDs corresponding to the first protocol registered;
if the first ID in the request is identified in IDs corresponding to the first protocol, permitting the communication connection based on the first protocol between the image processing apparatus and an external apparatus;
if the first ID in the request is not identified in IDs corresponding to the first protocol registered, determining whether the second ID in the request is identified in IDs corresponding to the second protocol registered; and
if the second ID in the request is identified in IDs corresponding to the second protocol, permitting the communication connection based on the first protocol to register the first ID extracted from the request in the IDs corresponding to the first protocol (S120-S140).

9. The method of claim 8, wherein if the second ID in the request is not identified in registered IDs corresponding to the second protocol, the method further comprising displaying a user interface, referred to hereinafter as "a Ul", through which a selection of whether to approve the request for the communication connection based on the first protocol can be made.

10. The method according to claim 8, further comprising displaying a UI through which a selection of whether to approve the request for the communication connection can be made if it is determined that any one of the first ID and the second ID is not registered (S150).

11. The method according to claim 8, wherein the displaying the UI comprises registering the first ID and the second ID, the first ID and the second ID being extracted from the request, if an approval selected through the UI is received (S160), and permitting the communication connection using the first protocol.

12. The method according to claim 11, wherein the display of the UI comprises blocking the communication connection using the first protocol if a disapproval selected through the UI is received.

13. The method according to claim 8, wherein the request comprises ID information of the external apparatus of all the communication protocols for communication between the external apparatus and the image processing apparatus.

14. The method according to claim 8, wherein the plurality of communication protocols comprises at least one of Wi-Fi, Wi-Fi direct, UPNP, Bluetooth and NFC.

## Patentansprüche

1. Bildverarbeitungseinrichtung (200), die Folgendes umfasst:
eine Kommunikationsschaltung (210), die dazu ausgelegt ist, auf Basis eines ausgewählten Kommunikationsprotokolls aus einer Vielzahl von Kommunikationsprotokollen eine Kommunikation durchzuführen;
einen Speicher (240), der dazu ausgelegt ist, Identifikations(ID)-Informationen, die mit jeweiligen Kommunikationsprotokollen einer Vorrichtungs-ID einer externen Einrichtung verknüpft sind, zu registrieren; und
mindestens einen Prozessor (250), der zu Folgendem ausgelegt ist: wenn eine Anforderung einer Kommunikationsverbindung, die ein erstes Protokoll der Vielzahl von Kommunikationsprotokollen verwendet, von der externen Einrichtung (100) empfangen wird, wobei die Anforderung eine Vorrichtungs-ID und eine erste ID, die dem ersten Protokoll entspricht, und eine zweite ID, die einem zweiten Protokoll entspricht, das sich vom ersten Protokoll unterscheidet, umfasst, Bestimmen, ob die erste ID in der Anforderung in den IDs, die dem ersten Protokoll entsprechen, das im Speicher registriert ist, identifiziert ist;
wenn die erste ID und die Vorrichtungs-ID in der Anforderung in den IDs, die dem ersten Protokoll entsprechen, identifiziert sind, Zulassen der Kommunikationsverbindung auf Basis des ersten Protokolls zwischen der Bildverarbeitungseinrichtung (200) und einer externen Einrichtung;
wenn die erste ID und die Vorrichtungs-ID in der Anforderung in den IDs, die dem ersten Protokoll entsprechen, das im Speicher (240) registriert ist, nicht identifiziert sind, Bestimmen, ob die zweite ID in der Anforderung in IDs, die dem zweiten Protokoll entsprechen, das im Speicher (240) registriert ist, identifiziert ist; und
wenn die zweite ID und die Vorrichtungs-ID in der Anforderung in den IDs, die dem zweiten Protokoll entsprechen, identifiziert sind, Zulassen der Kommunikationsverbindung auf Basis des ersten Protokolls zwischen der Bildverarbeitungseinrichtung (200) und einer externen Einrichtung, um die erste ID, die aus der Anforderung extrahiert wurde, in den IDs, die dem ersten Protokoll im Speicher (240) entsprechen, zu registrieren.

2. Bildverarbeitungseinrichtung (200) nach Anspruch 1, wobei, wenn die zweite ID in der Anforderung in den IDs, die dem zweiten Protokoll entsprechen, das im Speicher (240) registriert ist, nicht identifiziert ist, der mindestens eine Prozessor (250) dazu ausgelegt ist, eine Benutzerschnittstelle (230), im Folgenden als "eine UI" bezeichnet, anzuzeigen, die für eine Benutzerauswahl, ob die Kommunikationsverbindung unter Verwendung des ersten Protokolls genehmigt werden soll, ausgelegt ist.

3. Bildverarbeitungseinrichtung (200) nach Anspruch 1, die ferner eine Anzeige (220) umfasst,
wobei, wenn bestimmt wird, dass eine der ersten ID und der zweiten ID nicht im Speicher (240) registriert ist, der mindestens eine Prozessor (250) dazu ausgelegt ist, die Anzeige (220) zu steuern, um eine UI (230) anzuzeigen, über die eine Auswahl, ob die Anforderung der Kommunikationsverbindung genehmigt werden soll, vorgenommen werden kann.

4. Bildverarbeitungseinrichtung nach Anspruch 3, wobei der mindestens eine Prozessor (250) dazu ausgelegt ist, die erste ID und die zweite ID, wobei die erste ID und die zweite ID aus der Anforderung extrahiert werden, im Speicher (240) zu registrieren, wenn eine Genehmigung, die über die UI (230) ausgewählt wurde, empfangen wird, und die Kommunikationsverbindung unter Verwendung des ersten Protokolls zuzulassen.

5. Bildverarbeitungseinrichtung nach Anspruch 4, wobei der mindestens eine Prozessor (250) dazu ausgelegt ist, die Kommunikationsverbindung unter Verwendung des ersten Protokolls zu blockieren, wenn eine Ablehnung, die über die UI (230) ausgewählt wurde, empfangen wird.

6. Bildverarbeitungseinrichtung nach Anspruch 1, wobei die Anforderung ID-Informationen der externen Einrichtung (100) aller Kommunikationsprotokolle für eine Kommunikation zwischen der externen Einrichtung (100) und der Kommunikationsschaltung (210) umfasst.

7. Bildverarbeitungseinrichtung nach Anspruch 1, wobei die Vielzahl von Kommunikationsprotokollen mindestens eines von Wireless Fidelity (Wi-Fi), Wi-Fi Direct, Universal Plug and Play (UPNP), Bluetooth und Nahfeldkommunikation (NFC) umfasst.

8. Verfahren zum Steuern einer Bildverarbeitungseinrichtung, das Folgendes umfasst:
Empfangen einer Anforderung einer Kommunikationsverbindung von einer externen Einrichtung auf Basis eines ersten Protokolls, wobei die Anforderung eine erste Identifikation, ID, die mit dem ersten Protokoll verknüpft ist, und eine zweite ID, die mit einem zweiten Protokoll verknüpft ist, das sich vom ersten Protokoll unterscheidet, aus einer Vielzahl von Kommunikationsprotokollen (S110) umfasst; und
Bestimmen, ob die erste ID in der Anforderung in IDs, die dem ersten registrierten Protokoll entsprechen, identifiziert ist;
wenn die erste ID in der Anforderung in den IDs, die dem ersten Protokoll entsprechen, identifiziert ist, Zulassen der Kommunikationsverbindung auf Basis des ersten Protokolls zwischen der Bildverarbeitungseinrichtung und einer externen Einrichtung;
wenn die erste ID in der Anforderung in den IDs, die dem ersten registrierten Protokoll entsprechen, nicht identifiziert ist, Bestimmen, ob die zweite ID in der Anforderung in IDs, die dem zweiten registrierten Protokoll entsprechen, identifiziert ist; und
wenn die zweite ID in der Anforderung in den IDs, die dem zweiten Protokoll entsprechen, identifiziert ist, Zulassen der Kommunikationsverbindung auf Basis des ersten Protokolls, um die erste ID, die aus der Anforderung extrahiert wurde, in den IDs, die dem ersten Protokoll entsprechen, zu registrieren (S120-S140) .

9. Verfahren nach Anspruch 8, wobei, wenn die zweite ID in der Anforderung nicht in registrierten IDs, die dem zweiten Protokoll entsprechen, identifiziert ist, das Verfahren ferner das Anzeigen einer Benutzerschnittstelle, im folgenden als "eine UI" bezeichnet, umfasst, über die eine Auswahl, ob die Anforderung der Kommunikationsverbindung auf Basis des ersten Protokolls genehmigt werden soll, vorgenommen werden kann.

10. Verfahren nach Anspruch 8, das ferner das Anzeigen einer UI umfasst, über die eine Auswahl, ob die Anforderung der Kommunikationsverbindung genehmigt werden soll, vorgenommen werden kann, wenn bestimmt wird, dass eine der ersten ID und der zweiten ID nicht registriert ist (S150).

11. Verfahren nach Anspruch 8, wobei das Anzeigen der UI das Registrieren der ersten ID und der zweiten ID, wobei die erste ID und die zweite ID aus der Anforderung extrahiert werden, wenn eine Genehmigung, die über die UI ausgewählt wurde, empfangen wird (S160), und das Zulassen der Kommunikationsverbindung unter Verwendung des ersten Protokolls umfasst.

12. Verfahren nach Anspruch 11, wobei das Anzeigen der UI das Blockieren der Kommunikationsverbindung unter Verwendung des ersten Protokolls umfasst, wenn eine Ablehnung, die über die UI ausgewählt wurde, empfangen wird.

13. Verfahren nach Anspruch 8, wobei die Anforderung ID-Informationen der externen Einrichtung aller Kommunikationsprotokolle für eine Kommunikation zwischen der externen Einrichtung und der Bildverarbeitungseinrichtung umfasst.

14. Verfahren nach Anspruch 8, wobei die Vielzahl von Kommunikationsprotokollen mindestens eines von Wi-Fi, Wi-Fi Direct, UPNP, Bluetooth und NFC umfasst.

## Revendications

1. Appareil de traitement d'images (200) comprenant :
une circuiterie de communication (210) configurée pour exécuter une communication sur la base d'un protocole de communication sélectionné parmi une pluralité de protocoles de communication ;
un dispositif de stockage (240) configuré pour enregistrer des informations d'identification, ID, associées à des protocoles de communication respectifs d'un ID de dispositif d'un appareil externe ; et
au moins un processeur (250) configuré pour : si une requête pour une connexion de communication utilisant un premier protocole de la pluralité de protocoles de communication est reçue à partir de l'appareil externe (100), la requête comportant un ID de dispositif et un premier ID correspondant au premier protocole et un deuxième ID correspondant à un deuxième protocole différent du premier protocole, déterminer si le premier ID dans la requête est identifié dans des ID correspondant au premier protocole enregistré dans le dispositif de stockage ;
si le premier ID et l'ID de dispositif dans la requête sont identifiés dans des ID correspondant au premier protocole, permettre la connexion de communication sur la base du premier protocole entre l'appareil de traitement d'images (200) et un appareil externe ;
si le premier ID et l'ID de dispositif dans la requête ne sont pas identifiés dans des ID correspondant au premier protocole enregistré dans le dispositif de stockage (240), déterminer si le deuxième ID dans la requête est identifié dans des ID correspondant au deuxième protocole enregistré dans le dispositif de stockage (240) ; et
si le deuxième ID et l'ID de dispositif dans la requête sont identifiés dans des ID correspondant au deuxième protocole, permettre la connexion de communication sur la base du premier protocole entre l'appareil de traitement d'image (200) et l'appareil externe pour enregistrer le premier ID extrait à partir de la requête dans les ID correspondant au premier protocole dans le dispositif de stockage (240).

2. Appareil de traitement d'images (200) selon la revendication 1 dans lequel, si le deuxième ID dans la requête n'est pas identifié dans des ID correspondant au deuxième protocole enregistré dans le dispositif de stockage (240), ledit processeur (250) est configuré pour afficher une interface utilisateur (230), désignée ci-après par "UI", configurée pour une sélection utilisateur d'approuver ou non la connexion de communication utilisant le premier protocole.

3. Appareil de traitement d'image (200) selon la revendication 1, comprenant en outre un écran (220), dans lequel
s'il est déterminé qu'un ID quelconque parmi le premier ID et le deuxième ID n'est pas enregistré dans le dispositif de stockage (240), ledit processeur (250) est configuré pour amener l'écran (220) à afficher une UI (230) par l'intermédiaire de laquelle une sélection d'approuver ou non la requête pour la connexion de communication peut être effectuée.

4. Appareil de traitement d'images selon la revendication 3, dans lequel ledit processeur (250) est configuré pour enregistrer le premier ID et le deuxième ID, ledit premier ID et ledit deuxième ID étant extraits à partir de la requête, dans le dispositif de stockage (240) si une approbation sélectionnée par l'intermédiaire de l'UI (230) est reçue, et pour permettre la connexion de communication utilisant le premier protocole.

5. Appareil de traitement d'images selon la revendication 4, dans lequel ledit processeur (250) est configuré pour bloquer la connexion de communication utilisant le premier protocole si une désapprobation sélectionnée par l'intermédiaire de l'UI (230) est reçue.

6. Appareil de traitement d'images selon la revendication 1, dans lequel la requête comprend des informations d'ID de l'appareil externe (100) de tous les protocoles de communication pour une communication entre l'appareil externe (100) et la circuiterie de communication (210).

7. Appareil de traitement d'images selon la revendication 1, dans lequel la pluralité de protocoles de communication comprend au moins un élément parmi fidélité sans fil (Wi-Fi), direct Wi-Fi, UPNP (Universal plug and play), Bluetooth et communication en champ proche (NFC).

8. Procédé permettant de contrôler un appareil de traitement d'images, comprenant :
recevoir une requête pour une connexion de communication à partir d'un appareil externe sur la base d'un premier protocole, la requête comportant une première identification, ID, associée au premier protocole et un deuxième ID associé à un deuxième protocole différent du premier protocole parmi une pluralité de protocoles de communication (S110) ; et
déterminer si le premier ID dans la requête est identifié dans des ID correspondant au premier protocole enregistré ;
si le premier ID dans la requête est identifié dans des ID correspondant au premier protocole, permettre la connexion de communication sur la base du premier protocole entre l'appareil de traitement d'images et un appareil externe ;
si le premier ID dans la requête n'est pas identifié dans des ID correspondant au premier protocole enregistré, déterminer si le deuxième ID dans la requête est identifié dans des ID correspondant au deuxième protocole enregistré ; et
si le deuxième ID dans la requête est identifié dans des ID correspondant au deuxième protocole, permettre la connexion de communication sur la base du premier protocole pour enregistrer le premier ID extrait à partir de la requête dans les ID correspondant au premier protocole (S120-S140).

9. Procédé selon la revendication 8 dans lequel, si le deuxième ID dans la requête n'est pas identifié dans des ID enregistrés correspondant au deuxième protocole, le procédé comprenant en outre afficher une interface utilisateur, désignée ci-après par "UI", par l'intermédiaire de laquelle une sélection d'approuver ou non la requête pour la connexion de communication sur la base du premier protocole peut être effectuée.

10. Procédé selon la revendication 8, comprenant en outre afficher une UI par l'intermédiaire de laquelle une sélection d'approuver ou non la requête pour la connexion de communication peut être effectuée s'il est déterminé qu'un ID quelconque parmi le premier ID et le deuxième ID n'est pas enregistré (S150).

11. Procédé selon la revendication 8, dans lequel l'étape d'affichage de l'UI comprend enregistrer le premier ID et le deuxième ID, le premier ID et le deuxième ID étant extraits à partir de la requête, si une approbation sélectionnée par l'intermédiaire de l'UI est reçue (S160), et permettre la connexion de communication utilisant le premier protocole.

12. Procédé selon la revendication 11, dans lequel l'étape d'affichage de l'UI comprend bloquer la connexion de communication utilisant le premier protocole si une désapprobation sélectionnée par l'intermédiaire de l'UI est reçue.

13. Procédé selon la revendication 8, dans lequel la requête comprend des informations d'ID de l'appareil externe de tous les protocoles de communication pour une communication entre l'appareil externe et l'appareil de traitement d'images.

14. Procédé selon la revendication 8, dans lequel la pluralité de protocoles de communication comprend au moins un élément parmi Wi-Fi, direct Wi-Fi, UPNP, Bluetooth et NFC.
